# EUROPEAN PATENT SPECIFICATION

(11) **EP 3 937 332 B1**
(45) Date of publication and mention of the grant of the patent: **25.11.2026**
(21) Application number: 21193204.1
(22) Date of filing: 02.05.2019
(51) Int. Cl.: H02J 3/38, H02S 40/32, H02J 3/40, H02J 3/46, H02S 40/30

(54) **SYSTEMS AND METHODS TO INCREASE THE RELIABILITY AND THE SERVICE LIFE TIME OF PHOTOVOLTAIC (PV) MODULES**
SYSTEME UND VERFAHREN ZUR ERHÖHUNG DER ZUVERLÄSSIGKEIT UND LEBENSDAUER VON FOTOVOLTAIKMODULEN
SYSTÈMES ET PROCÉDÉS POUR AUGMENTER LA FIABILITÉ ET LA DURÉE DE VIE DE MODULES PHOTOVOLTAÏQUE (PV)

(30) Priority: 10.05.2018 US 201862669499 P
(43) Date of publication of application: 12.01.2022
(62) Document number(s) of the earlier application(s) in accordance with Art. 76 EPC: 19172253.7 / 3 567 692
(73) Proprietor: SolarEdge Technologies Ltd., 4673335 Herzeliya (IL)
(72) Inventor: YOSCOVICH, Ilan, 4673335 Herzeliya (IL); HAR-SHAI, Liron, 4673335 Herzeliya (IL); GROSSBERG, Amir, 4673335 Herzeliya (IL); ATIAS, Matan, 4673335 Herzeliya (IL)
(74) Representative: V.O.

(56) References cited:
- EP-A2- 2 256 918
- WO-A2-2014/152458
- CN-A- 108 011 583
- US-A1- 2010 286 840
- US-A1- 2013 063 119

## Description

### BACKGROUND

A possible way of reducing the costs of photovoltaic systems is to increase the reliability and the service lifetime of photovoltaic (PV) modules. A PV module failure may be caused by an effect that degenerates the module power that may or may not be reversed by normal operation and/or creates a safety issue. The underperformance of silicon wafer-based PV systems may be due to an effect termed "polarization" where n-type cells over time developed voltage induced power degeneration at a positive polarity from cells to ground. Conversely, several different module types with p-type cells may degenerate in negative polarity from cells to ground. Power losses in PV modules may be more pronounced the higher the voltage is. In crystalline silicon wafer-based PV modules, a reversible polarization effect may be applied for p-type and n-type cells, at negative and positive voltages, respectively.

US20130063119 discloses a device for converting power from a floating source of DC power to a dual direct current (DC) output, the device includes: positive and negative input terminals connectible to the floating source of DC power; and positive and negative, and ground output terminals connectible to the dual DC output that may feed an inverter. The inverter may be either a two or three level inverter. A charge storage device may be connected in parallel to, and charged from, the positive and negative input terminals. A resonant circuit may be also connected between the charge storage device and the dual DC output. The resonant circuit may include an inductor connected in series with a capacitor. The charge storage device may discharge through the resonant circuit by switching through to either the negative output terminal or the positive output terminal. WO2014152458 discloses a systems for controlling an electric power system, including implementation of voltage control using data analysis of advanced metering infrastructure-based secondary voltage measurement to control the voltages with respect to optimizing voltage for the specific purpose of making the electrical delivery system compatible with high variation distributed generation and loads such as photovoltaic generation, electric vehicle charging and microgrids.

### SUMMARY

The scope of this patent is defined by the independent claims. Embodiments in the description and figures which do not fall within the scope of the claims are to be interpreted as examples or background information. The following summary is a short summary of some of the inventive concepts for illustrative purposes only and is not intended to limit or constrain the features and examples in the detailed description. One skilled in the art will recognize other novel combinations and features from the detailed description.

A requirement of a power system may be to ensure an efficient delivery of power to a load. To enable the efficient delivery, monitoring of the power in terms of sensed voltages, currents and impedance by sensors of interconnected components of the power system may be conveyed to a controller for an analysis. The result of the analysis may be to send control signals responsive to the analysis to the interconnected components of the power system. The interconnected components may include sources of direct current (DC) power such as photovoltaic (PV) generators, wind power turbines, DC generators and/or batteries. DC to DC converters may be connected to the DC sources and the outputs of the DC to DC converters may be connected together to provide multiple strings which may be connected across a load. The load may be a DC to alternating current (AC) inverter which has an output which may be connected to a utility grid or a localized grid which may be separate to the utility grid.

The control signals as a result of the analysis may ensure that the interconnected components of the power system perform in concert to ensure efficient delivery of power to a load for example. The conveying and monitoring of the applied control signals may provide a dynamic way of providing efficient delivery of power to a load by use of control methods (e.g., adaptive and/or robust control methods). The use of control methods (e.g., adaptive and/or robust control methods) may be included in a power system which may include a source of direct current (DC) voltage supplied across a first output terminal and a second output terminal. A DC to AC inverter may include a first input terminal and a second input terminal. The first input terminal and the second input terminal may be connectable to the first output terminal and the second output terminal respectively. The DC to AC inverter may further include a third input terminal. The system may include a converter adaptable to convert a source of power on a third input terminal and a fourth input terminal to a DC output voltage on a third output terminal. The third input terminal and/or the fourth input terminal may be connectable to a ground. The third output terminal may be connectable to the first input terminal and/or the second input terminal. The voltage of the first input terminal and/or the second input terminal may be configurable and/or controllable to be substantially above or below the potential of the ground. The third output terminal may be connectable to the third input terminal. The source of power may be from at least one of a DC voltage and an AC voltage. The source of DC voltage may include a DC to DC converter with an output connected to the first output terminal and the second output terminal and a photovoltaic panel may connect to the input of the DC to DC converter.

The disclosure herein may include a method for a power system to provide a source of DC voltage across a first output terminal and a second output terminal of the source. The DC voltage may be applied to the input of an inverter. The DC voltage may be inverted to an AC voltage by the inverter. An electrical parameter (e.g. voltage, current, power, frequency, etc.) related to the inverting may be sensed on at least one of the first output terminal and the second output terminal. A converter may convert a source of power received on input terminals to a DC output power responsive to the sensed parameter, and one of the input terminals of the converter may be connected to a reference terminal. The DC output power may be added to the source of DC voltage on at least one of the first output terminal and the second output terminal. A voltage potential that may be substantially above or below a reference potential of the reference terminal may be established and maintained at the first output terminal and/or the second output terminal. The reference potential may be a ground potential. The power source may provide power at a DC voltage and/or at an AC voltage.

The disclosure herein may include a power system including a first group of DC power sources, and a first group of power converters with inputs connectable respectively to the power sources on multiple first terminals and second terminals. The outputs of the power converters may be connected in series between first output terminals and second output terminals. Multiple DC to AC inverters with inputs may be connected in parallel across first output terminals and the second output terminals. A second group of power converters may be adapted to convert power from multiple power sources on third input terminals and fourth input terminals to DC output voltages on third output terminals. The power sources may be DC voltages and/or AC voltages. At least one of the third input terminals and/or the fourth input terminals may be connectable to a ground. The third output terminals may be connectable to at least one of the first input terminals and the second input terminals. The voltages of at least one of the first input terminals and the second input terminals are configurable to be above or below the potential of the ground.

Regulating a reference voltage at one or more points in a power system may increase lifetime of components of the power system by alleviating certain voltage-affected degradation effects, for example, Potential Induced Degradation (PID). For example, if a voltage at a DC terminal of a PV string is regulated to be at a non-negative voltage (e.g. 0V, 10V or 50V), the entire string may be of non-negative voltage, and PID (which may be common in systems featuring negative voltages with respect to ground) may be alleviated or reduced. Another benefit of regulating a reference voltage at one or more points in a power system may be to enable extension of photovoltaic strings by referencing certain points in the power system to a voltage within regulatory limits.

As noted above, this Summary is merely a summary of some of the features described herein. It is not exhaustive, and it is not to be a limitation on the claims.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures. In the drawings, like numerals reference similar elements.
**Fig. 1A** illustrates a block diagram of a power system, according to illustrative aspects of the disclosure.
**Fig. 1B** illustrates a block diagram of a power system, according to illustrative aspects of the disclosure.
**Fig. 1C** illustrates a block diagram of a power system, according to illustrative aspects of the disclosure.
**Fig. 1D** illustrates a block diagram of a power system, according to illustrative aspects of the disclosure.
**Fig. 1E** illustrates circuitry which may be found in a power device such as power devices shown in **Fig. 1A****,** according to illustrative aspects of the disclosure.
**Fig. 1F** illustrates a block diagram of a power system, according to illustrative aspects of the disclosure.
**Fig. 2A** shows a block diagram of further details of a controller, according to illustrative aspects of the disclosure.
**Fig. 2B** shows a flowchart of a method, according to illustrative aspects of the disclosure.
**Fig. 3A** shows a power system, according to illustrative aspects of the disclosure.
**Fig. 3B** shows a power system, according to illustrative aspects of the disclosure.
**Fig. 4A** shows a power system, according to illustrative aspects of the disclosure.
**Fig. 4B** shows a power system, according to illustrative aspects of the disclosure.
**Fig. 5** shows a power system, according to illustrative aspects of the disclosure.
**Fig. 6A** shows a flowchart of a method, according to illustrative aspects of the disclosure.
**Fig. 6B** shows a flowchart of a method, according to illustrative aspects of the disclosure.
**Fig. 7** shows a voltage-current graph, according to illustrative aspects of the disclosure.
**Fig. 8** shows a power system, according to illustrative aspects of the disclosure.

### DETAILED DESCRIPTION

In the following description of various illustrative features, reference is made to the accompanying drawings, which form a part hereof, and in which is shown, by way of illustration, various features in which aspects of the disclosure may be practiced. It is to be understood that other features may be utilized and structural and functional modifications may be made, without departing from the scope of the present disclosure.

By way of introduction, features may be directed to system and methods in an interconnected power system to enable the voltage applied to terminals of an inverter are no longer floating voltages but may instead be established and maintained to be above the potential of a ground and/or earth potential.

The term "multiple" as used here in the detailed description indicates the property of having or involving several parts, elements, or members. The claim term "a plurality of" as used herein in the claims section finds support in the description with use of the term "multiple" and/or other plural forms. Other plural forms may include for example regular nouns that form their plurals by adding either the letter 's' or 'es' so that the plural of converter is converters or the plural of switch is switches for example.

The terms, "substantially", and, "about", used herein include variations that are equivalent for an intended purpose or function (e.g., within a permissible variation range). Certain ranges are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating unrequited number may be a number, which, in the context in which it is presented, provides the substantial equivalent of the specifically recited number.

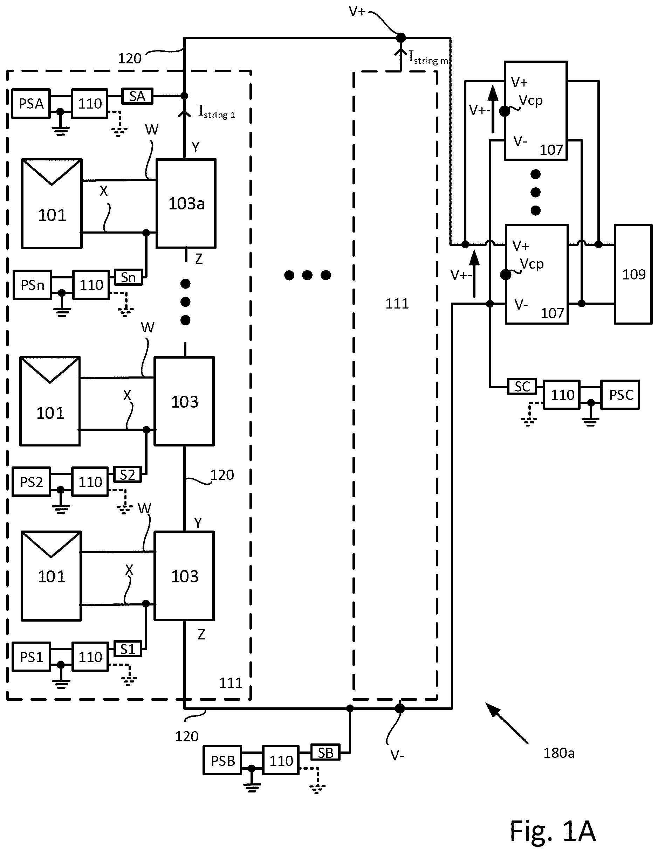

Reference is now made to **Fig. 1A****,** which illustrates a power system **180a** and details of wiring configurations **111** and their connections to system power device **107,** according to illustrative aspects of the disclosure. System power device **107** may be a direct current (DC) to alternating current (AC) inverter and load **109** may be a utility grid, a home electrical system or other load such as a single phase and/or three phase AC motor for example. System power devices **107** and system power devices described later may be, for example, a single phase and/or three phase DC to AC converter (also known as an inverter), a DC combiner box, and/or a monitoring, communication and/or control device. Multiple system power devices **107** may be connected in parallel to each other such that the inputs to system power devices **107** are connected in parallel and the outputs of system power devices **107** are also connected in parallel. According to some features, the inputs to system power devices **107** may be connected in parallel, but the outputs of system power devices **107** may be connected to individual, unconnected loads. According to some features, the outputs of system power devices **107** may be connected in parallel, but the inputs of power devices **107** may be connected to individual, unconnected power sources.

System power devices **107** may have an input at terminals designated as terminals **V+** and **V-** and terminal **V_{CP}**. System power device **107** may include connection terminal **V_{CP}** which may optionally connect to another connection terminal **V_{CP}** of another system power device **107.** According to some features, terminal **V_{CP}** may be a terminal internal to system power device **107** and not accessible for direct electrical connection to an external device (e.g., a different system power device **107).**

Converter **110** may be connected to power supply **PSC** and may provide a voltage to a terminal of system power device **107.** In **Fig. 1A****,** an output of converter **110** is shown connected to DC terminal **V-** of system power device **107.** According to some features, the output may optionally connect to DC terminal **V+** of system power device **107** and/or connection terminal **V_{CP}**. An input to converter **110** may be from power supply **PSC,** where one of the input connections to converter **110** is connected to ground and/or earth. Power supply **PSC** may provide a source of DC power to be converted by converter **110.** The source of DC power may be provided from a power source **101** (e.g., a PV generator) connected to power device **103/103a,** from a power device **103/103a,** from the string of series connected power devices **103/103a** and/or from an auxiliary source of DC power which may be separate from the DC power of power system **180a** (e.g. from a storage device such as a battery). The source of DC power may be provided from a conversion of AC power provided from the output of system power device **107,** an AC grid supply which may or may not be connected to system power device **107,** and/or from an auxiliary source of AC power which may be separate from the AC power of power system **180a.** According to some features, **PSC** may be an AC power source (e.g., a flywheel storage device or a wind turbine) and converter **110** may be an AC-to-DC converter.

Using power supply **PSA** as an example which may also apply to the other power supplies **PS1-PSn, PSB, PSC** and their respective converters **110,** converter **110** may have a switch **SA.** Switch **SA** may be configurable to connect or disconnect the output of converter **110** from terminals **Y, V+.** Similarly, switches **S1-Sn** may be configurable to connect or disconnect the output of respective converters **110** from terminals **X,** and switches **SB/SC** may be configurable to connect or disconnect the output of respective converters **110** from terminals **Z, V-.** In the drawings, a ground is shown (as a solid line) with a connection to the point where one of the terminals of power supplies **PS1-PSn, PSA, PSB, PSC** connects to an input terminal of respective converter **110.** Alternatively, a ground (in dotted line) may connect to one of the output terminals of respective converter **110,** and power supplies **PS1-PSn, PSA, PSB, PSC** connected to the input of converters **110** may be left without a direct connection to ground. In general, switches **S1-Sn, SA, SB** and **SC** may be connected separately to their respective converters **110** or may be an integrated/internal part of respective converters **110.** For descriptions and drawings that follow, switches on the outputs of converters **110** are not explicitly shown, but may or may not be included on the output of converters **110.** Similarly, in the descriptions that follow, ground connections on the outputs of converters **110** (not shown in the descriptions and diagrams that follow) may be used instead of connections to the point where one of the terminals of power supplies **PS1-PSn, PSA, PSB, PSC** connects to an input terminal of a respective converter **110.**

Multiple wiring configurations **111** are shown connected in parallel at terminals **V+** and **V-** which connect to the input of system power device **107** to provide voltage input **V+-**to the input of system power device **107.** The output of system power device **107** may connect to load **109.** Each wiring configuration **111** may include one or more power sources **101** which may be connected to a respective power device **103** and/or power device **103a** at terminals **W, X.** The outputs of power devices **103/103a** at terminals **Y, Z** may be connected together to form a serial string which connects between terminals **V+** and **V-.** As such, for **'m'** strings, the **'m'** strings may provide respective currents **I_{string 1}** - **I _{string m}** into power device **107** and voltage **V+-** across input terminals of power device **107.** Connections between power devices **103/103a** and strings of power device **103/103a** devices connected to system power devices **107** may be by use of power lines **120.**

Converters **110** are shown connected to system power device **107** and may also be connected to power devices **103/103a.** Converter **110** may be an integrated part of system power devices **107**/power devices **103/103a** and/or retrofitted to system power devices **107**/power devices **103/103a.** Multiple converters **110** within wiring configuration **111** are shown where for each converter **110,** a number of **'n'** power supplies **PS1-PSn** are connected to the input of each respective converter **110,** where one of the inputs to each converter **110** may be connected ground and/or earth. The output of each converter **110** with respective power supplies **PS1-PSn** may be connected to terminal **X** of power devices **103a/ 103.** Alternatively, the output of each converter **110** with respective power supplies **PS1-PSn** may be connected to terminal **W** of power devices **103a/ 103.** Power supply **PSA** connected to converter **110** has the output of converter **110** connected to terminal **Y** of power device **103a** but may also connect to terminal **Z** of power device **103a.** In a similar manner, a number of power supplies, similar to power supply **PSA,** with respective connections to converters **110,** may have respective outputs of converters **110** which connect to terminal **Y** and/or **Z** of remaining power devices **103** in wiring configurations **111.** According to some features described below, converter **110** may be a DC to DC converter such as a Buck, Boost, Buck/Boost, Buck+Boost, Cuk, Flyback, single-ended primary-inductor converter (SEPIC) and/or forward converter, switched auto-transformer or a charge pump. In other descriptions below converters **110** may be AC to DC converters such as uncontrolled diode rectifier circuits, phase-controlled rectifiers and/or switched mode power supply (SMPS).

Power supplies **PS1-PSn, PSA** may provide a source of DC power to be converted by converters **110.** The source of DC power may be provided from a power source **101** connected to power device **103/103a,** from a power device **103/103a,** from the string of series connected power devices **103/103a** and/or from an auxiliary source of DC power which may be separate from the DC power of power system **180a.** The source of DC power may be provided from a conversion of AC power provided from the output of system power device **107,** an AC grid supply which may or may not be connected to system power device **107,** and/or from an auxiliary source of AC power which may be separate from the AC power of power system **180a.** Features and operation of converters **110** are described in greater detail below in the descriptions which follow.

According to some features, one or more wiring configurations **111** might not include power devices **103a** or **103.** For example, a wiring configuration **111** may include multiple power sources **101** directly connected in series or in parallel. For example, a wiring configuration **111** may have ten, twenty or thirty serially-connected photovoltaic panels. According to some features, a wiring configuration **111** may include a first group of one or more directly connected power sources **101,** with a second group of one or more power sources **101** connected via power devices **103a** or **103** connected to the first group. This arrangement may be useful in power installations where some power sources **101** may be susceptible to factors which reduce power generation (e.g. PV generators which are occasionally shaded by shade, wind turbines which occasionally suffer from a reduction in wind) and where other power sources **101** are less susceptible to power-reducing factors.

Whereas power supplies **PS1-PSn, PSA** and respective converters **110** may be included in a wiring configuration **111,** it may also be possible to connect a power supply and a corresponding converter to an overall parallel connection of wiring configurations **111.** An example of the connection to the overall parallel connection may be power supply **PSB** and its respective converter **110** output is shown connected to terminal **Z/V-** via switch **SB.** In a similar way, the connection to the overall parallel connection may be power supply **PSA** and a corresponding converter **110** may be connected to terminal **Y/V+** via switch **SA.** A power supply and corresponding converter may be electrically terminated in a junction box and located in proximity to power sources **101/** power modules **103/103a,** at some point in the wiring of power cables **120** between wiring configurations **111** and system power devices **107,** and/or at power devices **107** for example.

As shown in **Fig. 1A****,** the power supplies **PS1-PSn, PSA,** and **PSC** connected via a converter **110** to a terminal (e.g. any of terminals **X,** terminal **V-,** or terminal **V+)** in wiring configuration **111** may ensure that the voltage at each terminal is maintained at a desirable voltage point with respect to the ground potential, or ensure voltages **V+** and **V-** applied to system power device **107** to be symmetrical at terminals **V+** and **V-**of system power device **107** with respect to terminal **Vcp** which may also be connected to earth potential for example. With respect to **Fig. 1A** and other figures which follow, multiple power supplies **PS1-PSn, PSA, PSB, PSC** and respective converters **110/** switches **S1-Sn, SA, SB, SC** are shown to illustrate where use of one or more power supplies and converters **110** may be connected to establish that the voltage at each terminal **V+, V-** is maintained at a desirable voltage point with respect to the ground potential, or to ensure that voltages applied to terminals **V+** and **V-** of system power device **107** are symmetrical at terminals **V+** and **V-.**

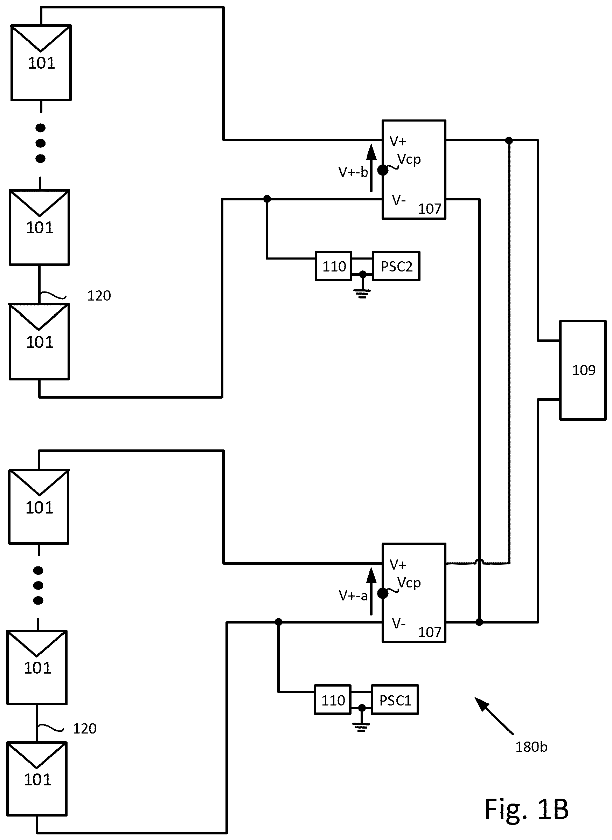

Reference is now made to **Fig. 1B****,** which illustrates a power system **180b,** according to illustrative aspects of the disclosure. Two or more strings of serially connected power sources **101** may be connected across the respective inputs of system power devices **107** as DC voltages **V+-a** and **V+-b.** Power lines **120** connect power sources **101** together in series and the string formed thereby to the input of a system power device **107.** The outputs of system power devices **107** may be connected in parallel and to load **109.** Power supplies **PSC1/PSC2** may provide a respective DC input to respective converters **110.** Features included and described in further detail in the descriptions of converters **110** herein may allow both power supplies **PSC1/PSC2** via respective converters **110** to be connected to respective system power devices **107** or just one of power supplies **PSC1/PSC2** to be connected to a system power device **107.** Connection of an output of converter **110** may be to either terminal **(V+, V-)** of system power device **107.** One of the terminals of power supplies **PSC1/PSC2** may be referenced to a desirable voltage point with respect to ground and/or a ground potential as shown.

For example, as shown in **Fig. 1B****,** a first string of serially-connected power sources **101** may be connected to the input of a first system power device **107,** and a second string of serially-connected power sources **101** may be connected to the input of a second system power device **107.** The first and second system power devices might not be connected at input terminals and may be (as shown in **Fig. 1B****)** connected in parallel at the output side of the system power devices **107.** According to some features, power sources **PSC1** and **PSC2** and corresponding converters **110** may both be featured, for example, where power sources **PSC1** and **PSC2** and corresponding converters **110** are integrated in system power devices **107.** According to some features (e.g., where a power source **PSC1/PSC2** and a corresponding converter **110** are retrofit to a power system), a single power source and converter may be connected to the first system power device **107,** and compensation voltage output by converter **110** may propagate to the second system power device **107** due to the parallel-output-connection of the first and second system power devices **107.**

A control feature of power system **180b** may be to establish and maintain the voltage applied to a terminal **V-** to be above the potential of the ground connection provided by a converter **110** or **to** establish and maintain the voltage applied to terminal **V-** to be below the potential of the ground connection provided by converter **110** if the polarity of the input to converter **110** from the power supply is reversed for example. Yet further, the control feature may include the feature to ensure voltage **V+-** applied to system power device **107** to be symmetrical at terminals **V+** and **V-** of system power device **107.** In other words, an equal amount of positive DC voltage and negative DC voltage may be applied on respective terminals **V+** and **V-** of system power device **107** to maintain a symmetric string voltage across system power device **107.**

Power supplies **PSC1/PSC2** may provide sources of DC power to be converted by respective converters **110.** The source of DC power may be provided from a power source **101** connected to power device **103/103a,** from a power device **103/103a,** from the string of series connected power devices **103/103a** and/or from an auxiliary source of DC power which may be separate from the DC power of power system **180b** (e.g. from a storage device such as a battery). The source of DC power may be provided from a conversion of AC power provided from the output of system power device **107,** an AC grid supply which may or may not be connected to system power device **107,** and/or from an auxiliary source of AC power which may be separate from the AC power of power system **180b.** According to some features, power supplies **PSC1/PSC2** may be AC power sources (e.g., a flywheel storage device or a wind turbine) and converters **110** may be AC-to-DC converters.

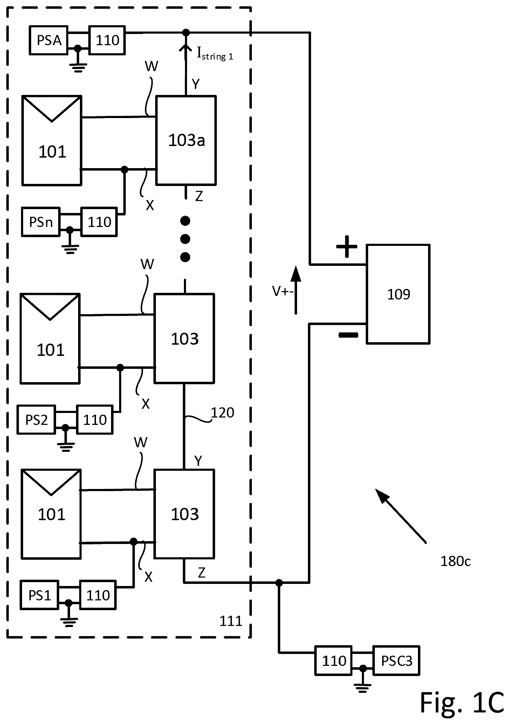

Reference is now made to **Fig. 1C****,** which illustrates a power system **180c,** according to illustrative aspects of the disclosure. Power system **180c** may be a DC-only system where the DC output of wiring configuration **111,** described above with respect to **Fig. 1A****,** is connected to a DC load **109.** Even though one wiring configuration **111** is shown in **Fig. 1C****,** it should be understood that multiple wiring configurations **111** may be connected together in various series/parallel and/or parallel interconnections that may be applied to DC load **109.** Alternatively, or in addition, power supply **PSC3** may be connected to the negative (-) terminal of DC load **109** and/or the positive (+) terminal of DC load **109.** One or more power supplies **PSn** located/ connected in wiring configuration **111** (e.g. at inputs to power devices **103** and/or at intermediate points within wiring configuration 111) may enable voltage **V+-** applied to DC load **109** to be symmetrical at terminals + and - of DC load **109.** In other words, an equal amount of positive DC voltage and negative DC voltage may be applied on respective terminals + and - of DC load **109** to maintain a symmetric string voltage across load **109.** Load **109** may be a DC load such as a DC motor, a battery and/or be the input of a DC to DC converter or the input of a DC to AC inverter. According to some features, one or more power supplies **PSn** located/ connected in the middle of wiring configuration **111** (e.g. at inputs to power devices **103** and/or at intermediate points within wiring configuration **111)** may maintain all voltages in wiring configuration **111** at a non-negative or non-positive voltage with respect to ground, which may alleviate potential induced degradation.

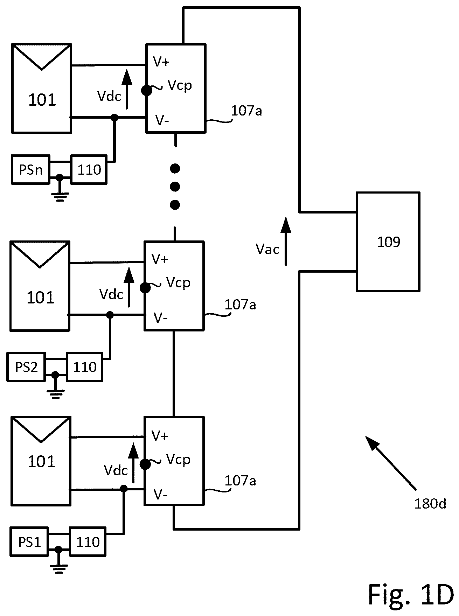

Reference is now made to **Fig. 1D****,** which illustrates a power system **180d,** according to illustrative aspects of the disclosure. Power system **180d** includes a series string of micro inverter **107a** AC outputs connected to an AC load **109.** The outputs of micro inverter **107a** may be single phase or three phase. The DC inputs to each of the micro inverters **107a** may be supplied by a power source **101.** Multiple power supplies **PS1, PS2-PSn** may connect to terminals **V-** of respective micro inverters **107a** via the outputs of converters **110.** The inputs of converters **110** may connect to respective power supplies **PS1, PS2-PSn.** The outputs of a converter **110** may connect to either terminal **V+** or **V-** of a microinverter **107a.**

As a numerical example, the **Vac** voltage across a string of serially connected inverters may be **110**Vrms. Power source **PS1** may be connected to a converter **110** configured to output **150**VDC to an input (as illustrated) or output of inverter **107a,** ensuring that the voltage at any point in power system **180d** does not fall below **0V** with respect to ground.

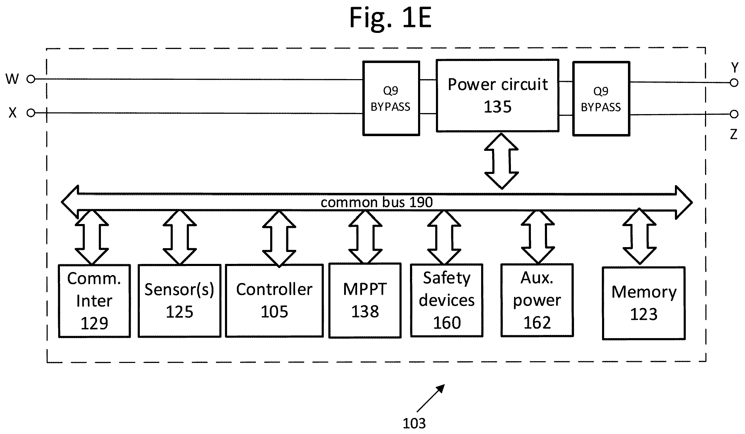

Reference is now made to **Fig. 1E****,** which illustrates circuitry that may be found in a power device **103,** according to illustrative aspects of the disclosure. Power device **103** may be similar to or the same as power devices **103/103a** shown in **Fig. 1A** which may provide respective input and output terminals **W, X** and **Y, Z.** Input and output terminals **W, X** and **Y, Z** may provide connection to power lines **120** (not shown). According to some features, power device **103/103a** may include power circuit **135.** Power circuit **135** may include a direct current-direct current (DC/DC) converter such as a Buck, Boost, Buck/Boost, Buck+Boost, Cuk, Flyback and/or forward converter, or a charge pump. In some features, power circuit **135** may include a direct current to alternating current (DC/AC) converter (also known as an inverter), such as a micro-inverter. Power circuit **135** may have two input terminals and two output terminals, which may be the same as the input terminals and output terminals of power device **103/103a.** In some features, Power device **103/103a** may include Maximum Power Point Tracking (MPPT) circuit **138,** configured to extract increased power from a power source.

According to some features, power circuit **135** may include MPPT functionality. In some features, MPPT circuit **138** may implement impedance matching algorithms to extract increased power from a power source the power device may be connected to. Power device **103/103a** may further include controller **105** such as a microprocessor, Digital Signal Processor (DSP), Application-Specific Integrated Circuit (ASIC) and/or a Field Programmable Gate Array (FPGA).

Still referring to **Fig. 1E****,** controller **105** may control and/or communicate with other elements of power device **103/103a** over common bus **190.** According to some features, power device **103/103a** may include circuitry and/or sensors/sensor interfaces **125** configured to measure operating power parameters directly or receive measured operating power parameters from connected sensors and/or sensor interfaces **125** configured to measure operating power parameters on or near the power source, such as the voltage and/or current output by the power source and/or the power output by the power source. According to some features, the power source may be a photovoltaic (PV) generator comprising PV cells, and a sensor or sensor interface may directly measure or receive measurements of the irradiance received by the PV cells, and/or the temperature on or near the PV generator.

Still referring to **Fig. 1E****,** according to some features, power device **103/103a** may include communication interface **129,** configured to transmit and/or receive data and/or commands from other devices. Communication interface **129** may communicate using Power Line Communication (PLC) technology, acoustic communications technology, or additional technologies such as ZIGBEE^{™}, Wi-Fi, BLUETOOTH^{™}, cellular communication or other wireless methods. Power Line Communication (PLC) may be performed over power lines **120** between power devices **103/103a** and system power device (e.g. inverter) **107** which may include a similar communication interface as communication interface **129.**

According to some features, power device **103/103a** may include memory **123,** for logging measurements taken by sensor(s)/sensor interfaces **125** to store code, operational protocols or other operating information. Memory **123** may be flash, Electrically Erasable Programmable Read-Only Memory (EEPROM), Random Access Memory (RAM), Solid State Devices (SSD) or other types of appropriate memory devices.

Still referring to **Fig. 1E****,** according to some features, power device **103/103a** may include safety devices **160** (e.g. fuses, circuit breakers and Residual Current Detectors). Safety devices **160** may be passive or active. For example, safety devices **160** may include one or more passive fuses disposed within power device **103/103a** where the element of the fuse may be designed to melt and disintegrate when excess current above the rating of the fuse flows through it, to thereby disconnect part of power device **103/103a** so as to avoid damage. According to some features, safety devices **160** may include active disconnect switches, configured to receive commands from a controller (e.g. controller **105,** or an external controller) to short-circuit and/or disconnect portions of power device **103/103a,** or configured to short-circuit and/or disconnect portions of power device **103/103a** in response to a measurement measured by a sensor (e. g. a measurement measured or obtained by sensors/sensor interfaces **125).** According to some features, power device **103/103a** may include auxiliary power circuit **162,** configured to receive power from a power source connected to power device **103/103a,** and output power suitable for operating other circuitry components (e.g. controller **105,** communication interface **129,** etc.). Communication, electrical connecting and/or data-sharing between the various components of power device **103/103a** may be carried out over common bus **190.** According to some features, auxiliary power circuit **162** may be connected to an output of a power device **103/103a** and designed to receive power from power sources connected to other power devices.

Power device **103/103a** may include or be operatively attached to a maximum power point tracking (MPPT) circuit. The MPPT circuit may also be operatively connected to controller **105** or another controller **105** included in power device **103/103a** which may be designated as a primary controller. Power device **103a** in **Fig. 1A** may be an example of a power device having primary controller, and in this example power devices **103** are secondary devices having secondary controllers. A primary controller in power device **103a** may communicatively control one or more other power devices **103** which may include controllers known as secondary controllers. Once a primary/secondary relationship may be established, a direction of control may be from the primary controller to the secondary controllers. The MPPT circuit under control of a primary and/or secondary controller **105** may be utilized to increase power extraction from power sources **101** and/or to control voltage and/or current supplied to system power device (e.g. an inverter or a load) **107.** According to some aspects of the disclosure, a primary power device **103a** might not be featured, and wiring configuration **111** may feature power devices **103,** without any of power devices **103** featuring a primary controller.

Referring still to **Fig. 1E****,** in some features, power device **103/103a** may include bypass unit **Q9** coupled between the inputs of power circuit **135** and/or between the outputs of power circuit **135.** Bypass unit **Q9** and/or power circuit **135** may be a junction box to terminate power lines **120** or to provide a safety feature such as fuses or residual current devices. Bypass unit **Q9** may also be an isolation switch for example. Bypass unit **Q9** may be a passive device, for example, a diode. Bypass units **Q9** may be controlled by controller **105.** If an unsafe condition is detected, controller **105** may set bypass unit **Q9** to ON, short-circuiting the input and/or output of power circuit **135.** In a case in which the pair of power sources **101** are photovoltaic (PV) generators, each PV generator provides an open-circuit voltage at its output terminals. When bypass unit **Q9** is ON, a PV generator may be shortcircuited, to provide a voltage of about zero to power circuit **135.** In both scenarios, a safe voltage may be maintained, and the two scenarios may be staggered to alternate between open-circuiting and short-circuiting PV generators. This mode of operation may allow continuous power supply to system control devices, as well as provide backup mechanisms for maintaining a safe voltage (i.e., operation of bypass unit **Q9** may allow continued safe operating conditions).

In some features, a power device **103/103a** may comprise a partial group of the elements illustrated in **Fig. 1E****.** For example, a power device **103/103a** might not include power circuit **135** (i.e. power circuit **135** may be replaced by a short circuit, and a single bypass unit **Q9** may be featured. In a scenario where power circuit **135** is not present, power device **103/103a** may be still used to provide safety, monitoring and/or bypass features.

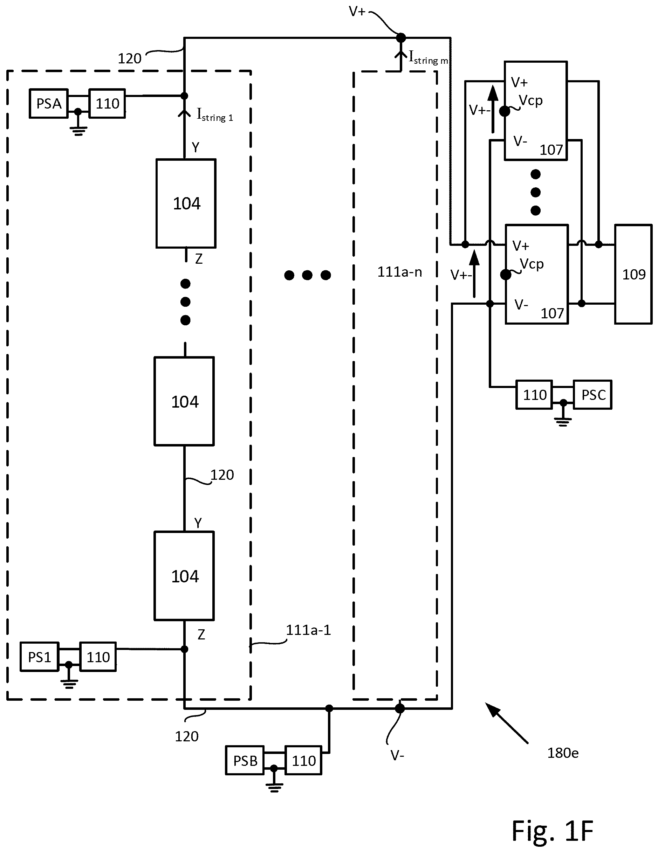

Reference is now made to **Fig. 1F****,** which illustrates a power system **180e** and details of wiring configurations **111a-1 - 111a-n** connected to system power devices **107,** according to illustrative aspects of the disclosure. Wiring configuration **111a-1** may be the same as wiring configuration **111a-n** or may be different. For the sake of ease of discussion that follows, wiring configurations are considered the same and referred to as wiring configuration(s) **111a-n.** Power system **180e** is similar to power system **180a** of **Fig. 1A** in that multiple wiring configurations **111a-n** are connected in parallel and provide voltage **V+-** to system power devices **107** just like multiple wiring configurations **111** are connected in parallel to provide voltage **V+** to system power devices **107** at terminals **V+** and **V-** in **Fig. 1A****.** Wiring configuration **111a-n** may include a series connection of power sources **104** and/or a single power source **104,** where the series connection is connected across terminals **V+** and **V-** of system power devices **107.** Alternatively, wiring configuration **111a-n** may include various series/ parallel connections of power sources **104.** Power sources **104** may be similar and/or dissimilar, for example, power sources **104** may similarly be batteries but dissimilar in terms of the battery type (for example Nickelcadmium (NiCad), Lithium, lead acid), the voltages provided by each battery as well as ratings of each battery in terms of ampere hour (Ah) for example. As such, power sources **104** may be a variety of power sources such as batteries, photovoltaic panels, DC generators and/or a combination of power source **101** and respective power device **103/103a** as shown with respect to power system **180a.** According to features of the disclosure herein, and as shown in **Fig. 1F****,** power devices **103/103a** might not be featured at all, rather, a series string of power sources may be formed by directly serially connecting output terminals of each power source **104.**

Connections of power supplies **PS1, PSA** and **PSC** to terminals **Y/ V+** and/or **Z/ V-**via converters **110,** according to descriptions which follow, may provide the option of the voltage applied to terminals **V-** and **V+** to be no longer floating. Instead the voltages on terminals **V-** and **V+** may be established above the potential of the ground by virtue of ground connections which may be provided by converters **110.** As such by way of non-limiting example, if power sources **104** are photovoltaic panels, during daytime operation terminals **V-** and **V+** may be kept above ground potential and at night below ground potential or vice versa. Such an arrangement for nighttime and/or daytime operation may mitigate voltage induced power degeneration of the photovoltaic panels during daytime operation as well as to affect a repair to the photovoltaic panels at nighttime. Alternatively, or in addition, to mitigate voltage induced power degeneration of the photovoltaic panels for daytime operation, for one day during daytime operation terminals **V-** and **V+** may be kept above ground potential and the next day below ground potential and so on, in an alternating fashion.

According to features of the disclosure herein, a converter **110** may be configured to output a first voltage during the daytime and a second voltage at night. As a non-limiting example, a converter **110** may be integrated into a system power device **107** and may be configured to output a voltage to set the voltage operating point at terminal **V-.** When substantial input power (e.g., a power level above a first threshold) is measured at the system power device **107** (indicating a daytime condition of substantial production of photovoltaic power), converter **110** may output, for example, **10**V, to ensure that all photovoltaic generators connected to the system power device input are referenced to a positive voltage. When an insubstantial input power (e.g., a power level under the first threshold or under a second threshold) is measured at the system power device **107** (indicating a nighttime condition of lack of substantial production of photovoltaic power), converter **110** may output, for example, **100**V, to increase the positive voltage bias of terminal **V-.** Increasing the positive voltage bias of connected PV generators (e.g., by increasing the positive voltage bias of terminal **V-)** may reverse potential-induced degradation effects that may develop on PV generators during the daytime.

A single power supply connected via a converter **110** to a reference point (e.g. any of terminals **X** indicated in **Fig. 1A****,** or terminal **V-,** or terminal **V+)** in wiring configuration **111** may be sufficient to reference the voltage of wiring configuration **111** to a desirable voltage point and/or ground potential. Multiple power sources **PS1...PSn** illustrated show various possibilities for implementation and not to indicate that all of the power sources and corresponding converters **110** are required. In descriptions above and those that follow for power systems, power sources (power sources **PS1...PSn** for example) may be referenced to a desirable voltage point with respect to ground and/or ground potential.

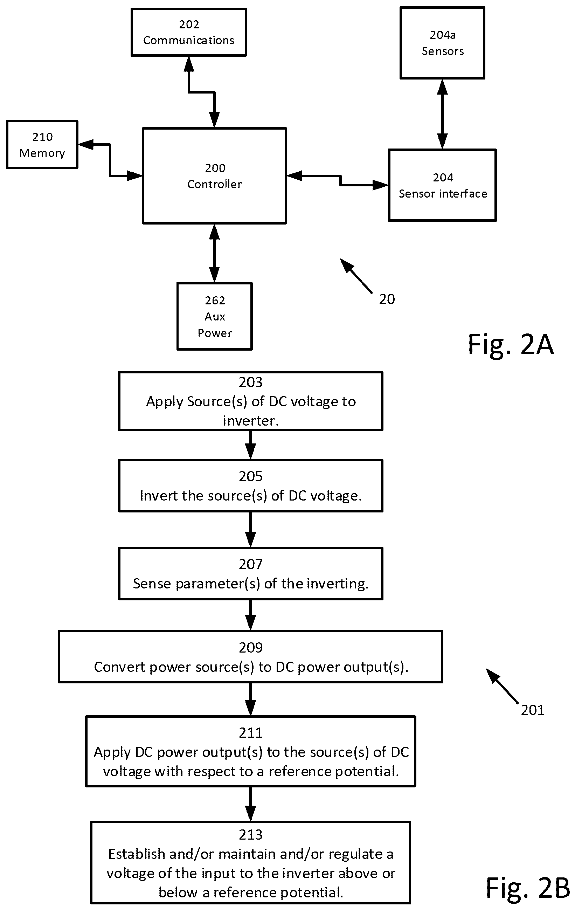

Reference is now made to **Fig. 2A** which shows a block diagram of further details of control unit **20** which includes a controller **200,** according to illustrative aspects of the disclosure. Controller **200** may include a microprocessor, microcontroller and/or digital signal processor (DSP) which may connect to a memory **210.** With respect to **Fig. 1A****,** controller **200** in one converter **110** may serve as a primary controller to the other controllers **200** of the other converters **110.** As such, communications interface **202** connected to controller **200** may provide communications between controllers **200** and other controllers **200/ 105** included in power system **180a** for example. Alternatively, a converter **110** if located in proximity to power devices **103/103a** and/or system power devices **107** may be controlled by a controller of power devices **103/103a** and/or system power devices **107** but may still retain the other features included in controller **200.**

The communications to and from communications interfaces **202** of converters **110** may be by power line communication (PLC) over power lines **120.** Communications in communications interface **202** may also include measured or sensed communication parameters via sensors **204a/** sensor interface **204.** Communications interfaces **202** may communicate with a local area network or cellular network in order to establish an internet connection which for example may provide a feature of remote control, remote monitoring and/or reconfiguration of power devices **103/103a** and/or system power device **107** for example. Controller **200** may further include auxiliary power circuit **262,** configured to receive power from a power source connected to power device **103/103a,** system power device **107** and output power suitable for operating other circuitry components (e.g. controller **200,** communication interface **202,** etc.). According to some features, auxiliary power circuit **262** may be connected to an output of a power device **103/103a,** system power device **107,** power supplies **PS1-PSn, PSA, Ps4** and designed to receive power from power sources connected to other power devices and/or sources of power independent from power produced by power system **180a.**

In the descriptions that follow, example method of design and operation for converter **110** are shown where power supplied to the input of converter **110** is an AC power and/or a DC power which may be supplied for example from a power source **101** connected to power device **103/103a,** from a power device **103/103a,** from the string of series connected power devices **103/103a** and/or from an auxiliary source of DC power which may be separate from the DC power of a power system **180a.**

Reference is now made to **Fig. 2B** which shows a flowchart of a method **201** according to illustrative aspects of the disclosure. Method **201** may be applied to power system **180a** of **Fig. 1A** in the description that follows. Steps of method **201** may be implemented by one of the controllers of system power devices **107,** power devices **103/103a** and/or converters **110** acting as a primary controller. At step **203,** DC power from wiring configurations **111** may be provided and applied to the input of system power devices **107** (e.g., inverters) across terminals **V+** and **V-.** Within a wiring configuration **111,** DC power may be provided via a string of serially connected power device **103/103a** outputs where the inputs to each of the power devices **103/103a** is connected to a power source **101.** Alternatively, in a wiring configuration **111,** a string of interconnected (e.g., connected in series or in parallel) power sources **101** may be applied to the inputs of system power devices **107.**

At step **205,** DC power (power = voltage × current) from the parallel connected wiring configurations **111** may be inverted by system power devices **107** to an AC power (power = voltage × current) output that may be applied to load **109.**

At step **207,** electrical parameters (e.g. voltage, current, power, resistance) may be sensed on terminals **V-, V_{CP}** and/or **V+** by a sensor of system power device **107.** At about the same time, sensors/sensor interfaces **125** of power device **103/103a** and/or the sensor interface **204**/sensors **204a** of converters **110** may sense electrical parameters on terminals **W, X, Y, Z, V-** and **V+.**

By way of non-limiting example, operation of power supply **PS1** is referred to where power system **180a** has one wiring configuration **111,** where the input of converter **110** is connected to power supply **PS1,** and where all other power supplies and converters are not referred to or used for ease of discussion. At about the same time of step **207,** in step **209,** the source of DC voltage from power supply **PS1** may be converted by converter **110** to provide a greater voltage at the output of converter **110** responsive to the electrical parameters sensed on **W, X, Y, Z, V-** and **V+** in step **207.** In other words, converter **110** is functioning as a boost converter. The level of the greater voltage produced at the output of converter **110** may be responsive to the electrical parameter sensed in step **207** or may be produced independently of the electrical parameters sensed in step **207.** As such, responsive to the electrical parameter sensed, for example voltage of terminals **Z** and/or **V-**(but may include also terminals **V+** and **V_{CP}**), the application of the output of converter **110** to terminal **X** and/or **Z** at step **211** may add the boosted output voltage of converter **110** to terminal **V-** of system power device **107.** As such, in step **213,** the voltage applied to terminal **V-** is no longer floating but is established above the potential of the ground connection provided by converter **110.**

Included in step **213** by operation of the other steps of method **201** is maintenance of the voltage applied to terminal **V-** above the potential of the ground connection provided by converter **110.** Moreover, if power supply **PSA** is used instead of power supply **PS1,** and if the polarity of power supply **PSA** is reversed, the output of converter **110** connected to **PSA** may be applied to terminals **W, Y/V+** such that the steps of method **201** may establish and maintain the voltage applied to terminal **V+** to be below the potential of the ground connection provided by converter **110.** This may be desirable, for example, when power sources **101** are photovoltaic panels having properties where potential induced degradation (PID) may be reduced by maintaining all of the photovoltaic panels at a voltage below zero with respect to ground. Further, when applying the steps of method **201** in wiring configuration **111,** it may be possible to make use of a power supplies **PSn** located/ connected in the middle of wiring configuration to enable voltage **V+-** applied to system power devices to be symmetrical at terminals **V+** and **V-.** In other words, an equal amount of positive DC voltage and negative DC voltage may be applied on respective terminals **V+** and **V-** of system power device **107** to maintain a symmetric string voltage.

By way of another non-limiting example, operation of power supply **PSB** is referred to where power system **180a** has multiple wiring configuration **111,** where the input of converter **110** is connected to power supply **PSB** and, for ease of discussion, all other power supplies and converters are not referred to or used. At about the same time of step **207,** at step **209,** the source of DC voltage from power supply **PSB** may be converted by converter **110** to provide an output voltage that is greater than the voltage at the input of converter **110** responsive to the electrical parameters sensed in step **207.** In other words, converter **110** is functioning as a boost converter for all of the wiring configurations **111.** The level of the voltage produced at the output of converter **110** may be responsive to the electrical parameter sensed in step **207** or may be produced independently of the electrical parameters sensed in step **207.** As such, responsive to the electrical parameter sensed, for example voltage of terminals **Z** and/or **V-** but may include also terminals **V+** and **V_{CP}**, the application of the output of converter **110** to terminal **Z** and/or **V-** at step **211** may add the boosted output voltage of converter **110** to terminal **V-** of system power device **107.**

By way of non-limiting numerical example, assume that a desirable voltage on terminal **V+** is **510** volts (v) and the voltage on terminal **V-** is substantially above ground potential (zero volts), **+10**v for example. A controller of power device **107** and/or power modules **103/103a** may be utilized to maintain a string voltage for each wiring configuration **111** of **500v (510v-10v).** The string voltage of **500v** may be a floating voltage but any one of power sources **PS1-PSn, PSA, PSB** or **PSC** and respective converter **110** may be used (switches **S1-Sn, SA, SB, SC** used to select which power supply converter **110** for example) to set the voltage on terminal **V-** to be **+10** volts and **510v** on terminal **V+.** As such sensors sensors/sensor interfaces **125/204/204a** may be used to sense the voltage at terminals **Y/ V+** and **Z/V-** (step **207).** Converter **110** may be used to apply a positive voltage (with respect to ground to terminal) to terminal **Z/ V-** (step **211)** via conversion of power from power supply **PSB** (step **209)** so that terminals **Y/ V+** and **Z/V-** are above earth potential. As such, if the voltage sensed on terminal **Y/ V+** is **+250v** and the voltage sensed on terminal **Z/V-** is **-250,** so that the differential voltage is **500v,** the output of the boost converter may add **260v** to terminal **Z/V-** so that by Kirchhoff voltage law the voltage on terminal **Z/V-** is **260v-250v** = **10v** and the voltage on terminal **Y/V+** is **510v** = **260v** + **250v.**

As such, in step **213,** the voltage applied to terminal **V-** is no longer floating but is established above the potential of the ground connection provided by converter **110** for all wiring configurations **111.** Included in step **213** by operation of the other steps of method **201** is maintenance of the voltage applied to terminal **V-** above the potential of the ground connection provided by converter **110.** Moreover, if power supply **PSB** is used at the top of the wiring configurations **111** and converter **110** connects to terminals **Y** and/or **W,** if the polarity of power supply **PSB** is reversed, the output of converter **110** connected to power supply **PSB** may be applied to terminals **W, Y/V+** such that the steps of method **201** may establish and maintain the voltage applied to terminal **V+** to be below the potential of the ground connection provided by converter **110.**

Further considerations may also be considered in an application to power system **180a** by use of power supply **PSC** instead of or in addition to power supply **PSB.** The overall application may use power supply **PSC** in steps similar to those described with respect to use of power supply **PSB** to again establish and maintain the voltage applied to terminal **V+** to be below the potential of the ground connection provided by converter **110** or to establish and maintain the voltage applied to terminal **V+** to be above the potential of the ground connection provided by converter **110.** In a similar way, use of power supply **PSC** may establish and maintain the voltage applied to terminal **V-** to be below the potential of the ground connection provided by converter **110** or to establish and maintain the voltage applied to terminal **V-** to be above the potential of the ground connection provided by converter **110.** The source of DC power converted by converter **110** may be provided from a conversion of AC power provided from the output of system power devices **107,** an AC grid supply which may or may not be connected to system power devices **107,** and/or from an auxiliary source of AC power which may be separate from the AC power of power system **180a.**

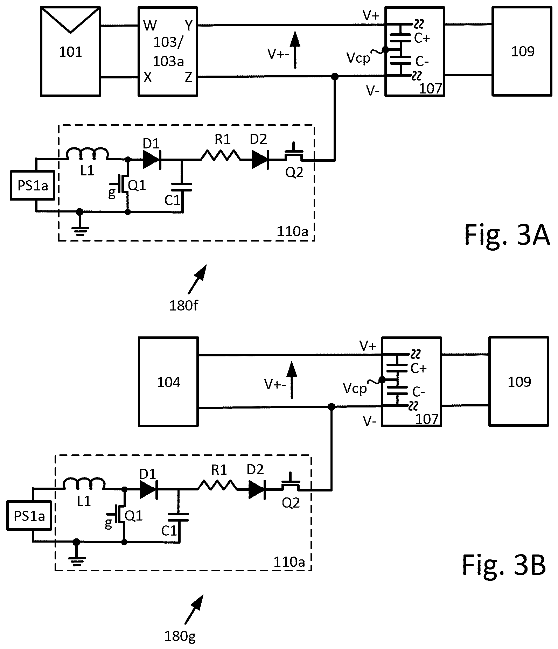

Reference is now made to **Fig. 3A** which shows a power system **180f,** according to illustrative aspects of the disclosure. Power system **180f** may be considered to be a simplified version of power system **180a** described above and may be referenced as such, for the ease of discussion in the description which follows. A power source **101** may be connected to the input of power device **103/103a** at terminals **W** and **X.** Power source **101** may be a photovoltaic panel, DC generator and/or battery/ storage device. For example, power source **101** may be a string of serially connected PV power sources, or a plurality or parallel-connected strings of PV power sources. As such, since power source **101** is shown as not being grounded, the voltage input to power device **103/103a** at terminals **Y** and **Z** may be considered a floating voltage. The output voltage **(V+-)** of power device **103/103a** at terminals **W** and **X** may also be considered to be a floating output voltage that may be applied to a system power device **107** at terminals **V+** and **V-.**

A partial view of the components of the input of system power device **107** is shown. System power device **107** may provide a further input terminal **V_{CP}** which may be the midpoint connection in the series connection of two input capacitors **C+, C-.** The series connection of two input capacitors **C+, C-** may be, for example, an input of a multi-level inverter topology implementation of system power device **107.** However, input terminal **V_{CP}** might not necessarily be externally provided, since according to some implementations of system power device **107,** a single capacitor connected across terminals **V+** and **V-** along with a switched bridge topology (not shown) included, may provide the inverter topology for system power device **107.** According to some features, more than two capacitors may be disposed between terminals **V+** and **V-.** For example, **6** capacitors may be disposed between terminals **V+** and **V-,** creating **5** midpoint voltage levels. Load **109** may be connected to the output of system power device **107.** Load **109** may be an AC motor, a transformer, a localized grid and/or a utility grid for example.

The output of converter **110a** may be connected to terminal **V-,** the output of converter **110a** may be the same as or similar to as discussed previously above with respect to converter **110** and may be similarly connected to terminals **V_{CP}**, **V+, W** and/or **X.** Converter **110a** is shown in **Fig. 3A** as a boost converter such that the input DC voltage from power supply **PS1a** is converted to an increased value of output voltage at the output of converter **110a.** Power supply **PS1a** connects across the input terminals of converter **110a.** Power supply **PS1a** is a source of DC voltage that may be provided from a power source **101** connected to power device **103/103a,** from a power device **103/103a,** from a string of series connected power devices **103/103a** and/or from an auxiliary source of DC power (from auxiliary power circuit **162/262** for example) which may be separate from the DC power of power system **180a.** Power supply **PS1a** may be same as any one of the power supplies **PS1** to **PSn.** The converter **110a** may be same as any one of the converters **110** connected to **PS1-PSn.**

A first input terminal of converter **110a** connects to a ground and/ or earth. A second input terminal of converter **110a** connects to a first end of inductor **L1.** A second end of inductor **L1** connects to the anode of diode **D1** and a first end of switch **Q1.** The cathode of **D1** connects to a first end of capacitor **C1.** A second end of switch **Q1** and a second end of capacitor **C1** connect to the ground and/ or earth. The cathode of **D1** also connects to a first end of resistor **R1.** A second end of resistor **R1** connects to the anode of diode **D2.** The cathode of diode **D2** connects to a first end of switch **Q2.** A second end of switch **Q2** connects to terminals **Z** and **V-** but may also alternatively be connected to **V_{CP}**, **V+, W** and/or **X.** Switch **Q2** may be an example of switches **S1-Sn, SA, SB** and **SC** described above. An appropriate pulse width modulation signal or other control signal may be applied to the gate **(g)** of switch **Q1** to provide the boost function of converter **110a** such that the input DC voltage from power supply **PS1a** is converted to an increased value of output voltage at the output of converter **110a.**

Reference is now made again to method **201** of **Fig. 2B** as applied to power system **180f** of **Fig. 3A****,** according to illustrative aspects of the disclosure. Steps of method **201** may be implemented by one of the controllers of system power device **107,** power device **103/103a** and/or converter **110a.** Power system **180f** uses one converter and one power supply, and one converter and one power supply may be used with respect to power systems **180a-180e** described above and other powers systems described below. At step **203,** DC power from power source **101** may be provided and applied to the input of system power device **107** via power device **103/103a** or power source **101** may be provided and applied to the input of system power device **107** directly (e.g., where power device **103/103a** is not featured). At step **205,** DC power (power = voltage × current) from power source **101** directly and/or from power device **103/103a** connected to power source **101** may be inverted by system power device **107** to an AC power (power = voltage × current) output that may be applied to load **109.** At step **207,** an electrical parameter (e.g., voltage, current, power, resistance) may be sensed on terminal **V-** by a sensor of system device **107,** sensors/sensor interfaces **125** of power device **103/103a** on terminal **Z** and/or sensor interface **204**/sensors **204a.**

At about the same time of step **207,** in step **209,** the source of DC voltage from power supply **PS1a** may be converted by converter **110a** to provide a greater voltage at the output of converter **110a** which is responsive to the electrical parameter sensed in step **207.** As such, responsive to the electrical parameter sensed, control of the switching of switch **Q1** may be application of an appropriate pulse width modulation signal to the gate **(g)** of switch **Q1.** At step **211,** the operation of switch **Q2** to be 'ON' may add the boosted output voltage of converter **110a** to terminal **V-** of system power device **107.** As such, in step **213,** the voltage applied to terminal **V-** is no longer floating but is established above the potential of the ground connection provided by converter **110a.** Included in step **213** by operation of the other steps of method **201** is continuous maintenance of the voltage applied to terminal **V-** above the potential of the ground connection provided by converter **110a.**

Where multiple system power devices are connected in parallel as shown with respect to power system **180a,** diode **D2** and resistor **R1** may be utilized as a current limiting device and/or other current limiting circuit to limit circulating currents between converters **110a.** Moreover, if the polarity of power supply **PS1a** is reversed, the output of converter **110a** may be applied to terminal **V+** such that the steps of method **201** may establish and maintain the voltage applied to terminal **V+** to be below the potential of the ground connection provided by converter **110a.** Where multiple system power devices are connected in parallel as shown with respect to power system **180a,** a single converter **110a** may provide the reference voltage to a single system power device, and by virtue of the parallel connection of system power devices **107,** each of the parallel-connected power devices **107** may be referenced to the voltage output by converter **110a.**

According to features of the disclosure, a power converter **110a** may be integrated into a system power device **107.** Where a power converter **110a** is integrated into each of multiple parallel-connected system power devices **107,** each power converter **110a** may be synchronized to output a common reference voltage (e.g., by a single system power device being designated as a primary system device and the primary system power device outputting a reference voltage to be used by the other system power devices), or only a single integrated power converter **110a** may be configured to output a reference voltage, and the other integrated power converters **110a** may be disabled and/or might not output a reference voltage.

Reference is now made to **Fig. 3B** which shows a power system **180g,** according to illustrative aspects of the disclosure. Power system **180g** is similar to power system **180f** except that power source **101** and power device **103/103a** in power system **180f** may be included in power source **104** of power system **180g.** Power source **104** may be as described previously with respect to **Fig. 1F** so that power source **104** may be a variety of power sources such as a battery or batteries, photovoltaic panel(s), DC generator(s) and/or a combination of power source **101** and respective power device **103/103a** as shown with respect to power system **180a.**

In the description above with respect to step **207** electrical parameters (e.g. voltage, current, power, resistance) may be sensed on terminals **V-, V_{CP}** and/or **V+** by a sensor of system power device **107,** by sensors/sensor interfaces **125** of power device **103/103a** and/or the sensor interface **204**/sensors **204a** of converters **110** on terminals **W, X, Y, Z, V-** and **V+.** Alternatively, or in addition, electrical parameters (e.g. voltage, current, power, resistance) may be sensed on the AC side of system power device(s) **107** on at least one of the phases of the output of system power device(s) **107** and/or the neutral of system power device(s) **107.** As such, where the output of system power device(s) **107** is **3** phase, the average voltage of the three phases may be measured (e.g. by direct measurement, or by calculation) and used in step **213,** to ensure that the voltage applied to terminal **V-** is no longer floating but is established above the potential of the ground connection provided by converters **110/110a.** Included in step **213** by operation of the other steps of method **201** may be continuous maintenance of the voltage applied to terminal **V-** referenced to a desirable voltage point with respect to ground and/or above the potential of the ground connection provided by converters **111/110a.**

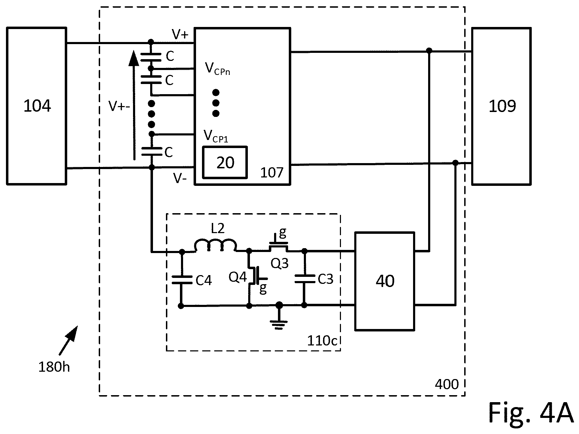

Reference is now made to **Fig. 4A** which shows a power system **180h,** according to illustrative aspects of the disclosure. Power source **104** connects to the input of inverter **400.** As discussed previously above, power source **104** may be one or more of a variety of power sources such as batteries, photovoltaic panels, DC generators and/or a combination of power source **101** and respective power device **103/103a** as shown with respect to power system **180a.** The DC voltage of power source **104** connects to terminals **V+** and **V-** of system power device **107** which may include control unit **20,** described above where sensors **204a**/sensor interface **204** may be utilized to sense the electrical parameter on terminals **V+, V-** and on **'n'** connection terminals **V_{CP1}-V_{CPn}**. The electrical parameter may include voltage (V), current (I) and power (V×I). The **'n'** connection terminals may be the midpoint connection in the series connection of input capacitors **C.** The series connection of multiple input capacitors **C** may be an input of a multi-level inverter topology implementation of inverter **400** for example. However, input terminals to inverter **400** on system power device **107** may provide a single capacitor **C** connected across terminals **V+** and **V-** along with a switched bridge topology (not shown) included, which may also provide the inverter topology for inverter **400.** According to some features, more than two capacitors **C** may be disposed between terminals **V+** and **V-.** For example, six capacitors may be disposed between terminals **V+** and **V-,** creating five midpoint voltage levels in addition to the end voltage levels of **V+** and **V-.** One or more of the five midpoint voltage levels and the two-end voltage levels may be measured to provide a reference measurement for regulation and control of a voltage level at one of the midpoint voltage and/or one of the end voltage levels.

Load **109** may be connected to the output of system power device **107.** Load **109** may be an AC motor, a transformer, a localized grid and/or a utility grid for example. The output of inverter **400** is shown as a single-phase output but may also be a multiple phase output such as a three-phase output for example. The output of inverter **400** is connected to the input of rectifier unit **40.** Rectifier unit **40** may be AC to DC converters such as uncontrolled diode rectifier circuits, phase-controlled rectifiers and/or switched mode power supplies (SMPS). Rectifier **40** may also include a transformer which may be used to galvanically isolate between the AC output of inverter **400/** load **109** and the DC input of converter **110b.** The transformer may also either increase and/or decrease the AC input to rectifier unit **40.**

The DC output of rectifier unit **40** connects across the input of converter **110b.** Converter **110b** is shown as a buck converter circuit topology. As such since one function of a buck converter may be to reduce the voltage at its input to a lower voltage at its output, a transformer may not be required in rectifier unit **40.** Capacitor **C3** connects across the input of converter **110b.** One input terminals of converter **110b** connects to ground and/ earth. The other input terminal of converter **110b** connects to one end of switch **Q3,** the other end of switch **Q3** connects to inductor **L2** and one end of switch **Q4.** The other end of inductor **L2** provides the output of converter **110b** and also connects to one end of capacitor **C4.** The remaining ends of capacitor **C4** and switch **Q4** connect to ground and/ earth. The output of converter **110b** is shown connected to terminal **V-** but may also connect to terminal **V+** and/or connection terminals **V_{CP1}-V_{CPn}**. The utilization of method **201** for inverter **400** may be to establish and maintain the voltage applied to terminal **V-** to be above the potential of the ground connection provided by converter **110b** or establish and maintain the voltage applied to terminal **V-** to be below the potential of the ground connection provided by converter **110b** if the polarity of the input to converter **110b** is reversed for example. In a similar way, inverter **400** may be configured and controlled to establish and maintain the voltage applied to terminal **V+** to be above the potential of the ground connection provided by converter **110b** or to establish and maintain the voltage applied to terminal **V+** to be below the potential of the ground connection provided by converter **110b,** if the polarity of the input to converter **110b** is reversed for example.

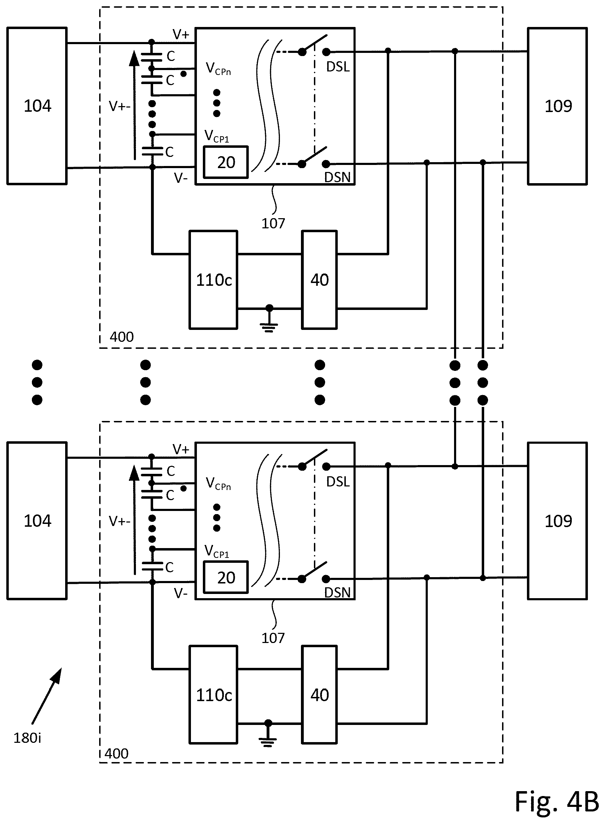

Reference is now made to **Fig. 4B****,** which shows a power system **180i,** according to illustrative aspects of the disclosure. Power system **180i** is similar to power system **180h** but may include multiple inverters **400,** each having one or more with multiple inputs from one or more power sources **104** and the output of each inverter **400** connected across a load **109.** Further detail of system power device **107** may include control unit **20** and may also include switches **DSL** and **DSN** that may disconnect or reconnect respectively the live and neutral outputs of system power device **107** from a load **109.** The output of system power device **107** is shown as a single-phase output but may also be a three-phase output. The three-phase output may include at least three switches that may disconnect or reconnect respectively the three live and/or neutral outputs of system power device **107** from load **109.** If power sources **104** are photovoltaic generators, switches **DSL** and **DSN** may disconnect the live and neutral outputs of system power device **107** from load **109** during nighttime operation of power system **180i.** Switches **DSL** and **DSN** may reconnect the live and neutral outputs of system power device **107** to load **109** during daytime operation of power system **180i.**

Reference is now made again method **201** and to power system **180i** when power sources **104** are photovoltaic generators and load **109** is a utility grid. Control units **20** of each inverter **400** may communicate with each other where one control unit **20** may be a primary control unit and other control units **20** are secondary control units. Sensors **204a/** sensor interface **204** may be utilized to sense electrical parameters on the live and neutral outputs of system power device **107,** terminals **V-, V_{CP1}-V_{CPn}** and **V+.**

During daytime operation switches **DSL** and **DSN** may connect the live and neutral outputs of system power device **107** to load **109.** At step **203,** DC powers from power sources **104** may be provided and applied to the inputs of system power devices **107.**

At step **205,** DC power (power = voltage × current) from power sources **104** may be inverted by respective system power devices **107** to an AC power (power = voltage × current) output that may be applied to load **109.**

At step **207,** electrical parameters (e.g., voltage, current, power, resistance) may be sensed for each inverter **400** on the respective terminals of each system device **107** by each of the sensor interfaces **204**/sensors **204a** provided by each control unit **20.**

At about the same time of step **207,** in step **209,** during daytime operation, the source of DC voltage from each rectifier unit **40** may be converted by converter **110b** to provide voltages at the outputs of each converter **110b** that is responsive to the electrical parameters sensed in step **207** for each inverter **400.** By way of non-limiting example, one of terminals **V_{CP1}-V_{CPn}** may be chosen as the terminal at which the voltage may be sensed for each inverter. As such, if the input to each system power device **107** has a six-capacitor input, terminal **V_{CP3}** (the midpoint of the input to each system power device **107)** of each inverter **400** may be sensed at step **207** and an appropriate control signal sent to each converter **110b** and/or also to power device **103/103a** that may be included in power source **104** from the primary control unit **20** so that each terminal **V_{CP3}** is controlled and maintained (step **213)** to have the same desired voltage and terminal **V-** is no longer floating but is established above the potential of the ground connection provided by each converter **110b.** Included in step **213** by operation of the other steps of method **201** may be continuous maintenance of the voltage applied to terminal **V-** above the potential of the ground connection provided by converter **110b.**

By way of non-limiting numerical example, assume that a desirable voltage on terminals **V+** is **510** volts (v) and the voltage on terminal **V-** is substantially above ground (or a "virtual ground") potential (zero volts), **+10v** for example. Control unit **20** may be utilized to maintain voltage **V+**-for each power source **104 of 500v (510v-10v)** at step **205** for each inverter **400.** Voltage **V+-** of **500v** is a floating voltage (e.g., voltage **V+** might not be directly referenced to ground, rather voltage **V+** may be referenced to a "virtual ground", with the "virtual ground" controlled to be at the same voltage as earth but galvanically isolated from earth) but any one of rectifier units **40** and respective converter **110b** may be used to set the voltage on terminal **V-** to be **+10** volts and **510v** on terminal **V+** by sensing the inverting of each system power device **107** (step **207).** Converter **110b** for each inverter **400** may be used (step **209)** to apply a respective positive voltage (with respect to ground to terminal) to each terminal **V-** (step **211)** via conversion of power from each rectifier unit **40** (step **209)** so that each of terminals **V_{CP3}** may be established and maintained (step **213)** at **260** volts. As such, during operation each of the inverters **400,** each inverter **400** may have different sensed parameter values needing adjustment from a respective converter **110b** to establish and maintain that terminal **V_{CP3}** of each inverter **400** may be established and maintained (step **213)** at the same value **(260** volts). For example, for one converter **400,** if the voltage on terminal **V+** is **+250v** and the voltage on terminal **V-** is **-250v,** so that the differential voltage between terminals **V-** and **V+** is **500v,** the output of converter **110b** may add **260v** to terminal **V-** so that by Kirchhoff voltage law the voltage on terminal **V-**is **260v-250v** = **10v** and the voltage on terminal **V+** is **510v** = **250v** + **260v.**

According to features of the disclosure, each system power device **107** may be controlled to maintain an internal voltage level at a substantially common level. For example, system power devices **107** as shown in **Fig. 4B** may feature a plurality of input capacitors **C,** creating a plurality of intermediate voltage levels. One of the intermediate voltage levels may be regulated (e.g. measured at step **207** of method **201** when applied to system power devices **107)** to be at a certain voltage level, with the certain voltage level regulated at each system power device **107** substantially the same for all system-connected power devices. This regulation may be useful, for example, to prevent circular current flows between system power devices **107** connected in parallel at input terminal and/or at output terminals. The intermediate voltage point regulated may be an intermediate input voltage (e.g., the voltage **Vcp** of **Fig. 3A****)** or an intermediate output voltage (e.g., a "virtual neutral" voltage internally created but not output by system power device **107** of **Fig. 4B****,** or, where system power device **107** is designed to output a neutral voltage line, the neutral voltage line may be regulated for each system power device **107** to be at a substantially common voltage level).

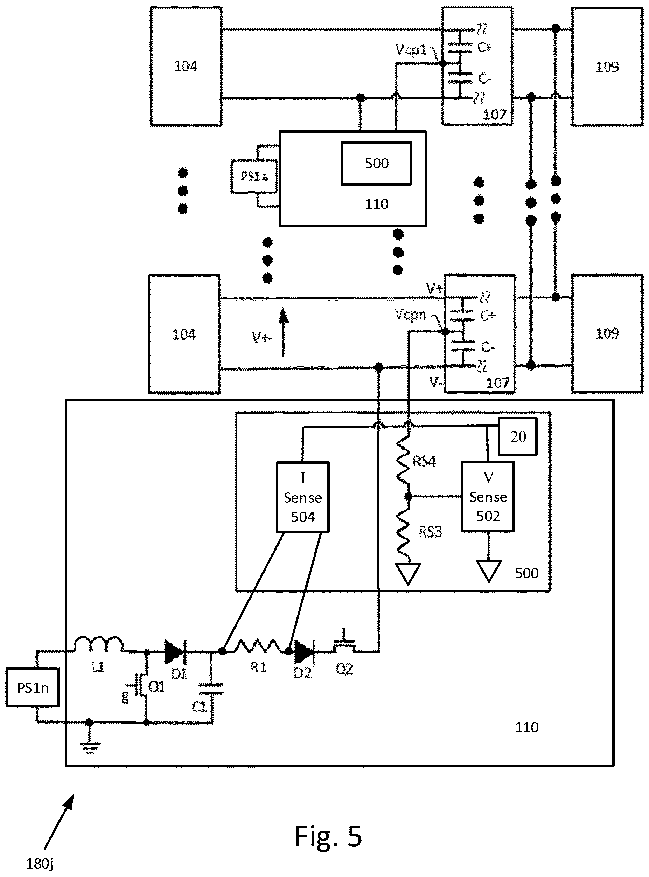

Reference is now made to **Fig. 5****,** which shows a power system **180j,** according to illustrative aspects of the disclosure. Converter **110** includes circuitry **500** configured to regulate the output of converter **110.** Circuitry **500** may include one or more sensors, for example, current and/or voltage sensors. According to the illustrative circuitry shown in **Fig. 5****,** circuitry **500** includes two resistors **RS3, RS4** connected in series between terminal **Vepn** and ground and/or earth. A first end of resistor **RS4** is connected to terminal **Vepn** and a second end of resistor **RS4** is connected to a first end of resistor **RS3.** The second end of resistor **RS3** is connected to the ground and/or earth potential. Circuitry **500** also includes a voltage sensor **502.** A first end of voltage sensor **502** is connected to the first end of resistor **RS3** and a second end of voltage sensor **502** is connected to the ground and/or earth potential. Voltage sensor **502** may also be operatively connected to control unit **20** and/or controller **200.** In some examples, voltage sensor **502** may be part of control unit **20.** In some examples, control unit **20** may be located in system power device **107** and/or converter **110.** As another example, control unit **20** may be a separate unit. Circuitry **500** also includes a current sensor **504** connected in parallel to resistor **R1** of converter **101.** Current sensor **504** is also operatively connected to control unit **20** and/or controller **200.** In some examples, current sensor **504** may derive the current flowing through resistor **R1** based on the voltage across resistor **R1** and the resistance of resistor **R1** (current = voltage ÷ resistance). In some examples, current sensor **504** may be connected in series with resistor **R1** and measure the current flowing through resistor **R1** directly.

Circuitry **500** is configured to control the output of converter **110.** As mentioned above, in some examples, switch **Q1** and/or switch **Q2** may be controlled by control unit **20.** The control of these switches **Q1, Q2** may be based on one or more parameter sensed by the circuitry **500.** As an example, the one or more parameter may include: voltage, current, etc. By adjusting control of switches **Q1** and/or **Q2,** control unit **20** may adjust the output of converter **110.** For example, increasing a duty cycle of switch **Q1** may increase the voltage output by converter **110.**

In cases where power system **180j** includes a plurality of system power devices **107,** it may occur that a voltage at terminal **Vcpn** for one or more of the system power devices **107** may be greater (e.g., substantially greater) than a target voltage that corresponds to a voltage or a target voltage at terminal **Vcpn** at one or more other system power devices **107.** For example, substantially greater in this context may be within a certain range, e.g., +/- five volts, +/- tens of millivolts, +/- hundreds of millivolts, etc. If the voltage **Vcpn** is higher at a first system power device than at a second system power device, then the second system power device may be adversely affected, for example, shut down. In such cases, in the absence of circuitry that senses current and regulates the voltage accordingly, then other power devices **107** (e.g., the second system power device which may be operating at or below the desired voltage) may be inadvertently bypassed or deactivated, and only the one or more system power device **107** operating at a voltage greater than the desired voltage may continue to supply power to the load **109.** In order to help allay such a scenario, the circuitry **500,** in addition to sensing voltage, may also sense current, e.g., the current flowing through the converter **110** at resistor **R1.** If one or more sensed parameter is indicative of a voltage that is higher than a desired voltage or higher than a voltage operating point of other system power devices **107,** then controller **200** may operate in order to decrease the voltage output by the converter **110,** which decreases the voltage at terminal **Vcpn** for that system power device **107.**

It will be appreciated that in some examples, a converter **110,** which is connected to ground potential, and circuitry **500** may be used to regulate a similar voltage value at a plurality of terminals **Vcpn** for a plurality of system power devices **107** by regulating and/or directly controlling the voltage at terminal **V-, V+,** etc. In some cases, for example where terminal **Vcpn** is a common neutral (or "virtual neutral", i.e., a terminal corresponding to terminals at other system power devices **107** having a similar or identical voltage without directly connecting the **Vepn** terminals of the various system power devices **107)** for the plurality of system power devices **107,** then a single circuit (e.g. circuitry **500)** may be used to control the voltage at terminal **Vcpn** for the plurality of system power devices **107.** In some examples, for example, where the power system has a plurality of power supplies **PSn** and a plurality of system power devices **107** share a common neutral or a common "virtual neutral", in some cases where one or more of the power supplies **PSn** cease to operate, then the power system may continue to function with one or more of the remaining power supplies **PSn** providing the required voltage to terminal **V-, V+,** etc.

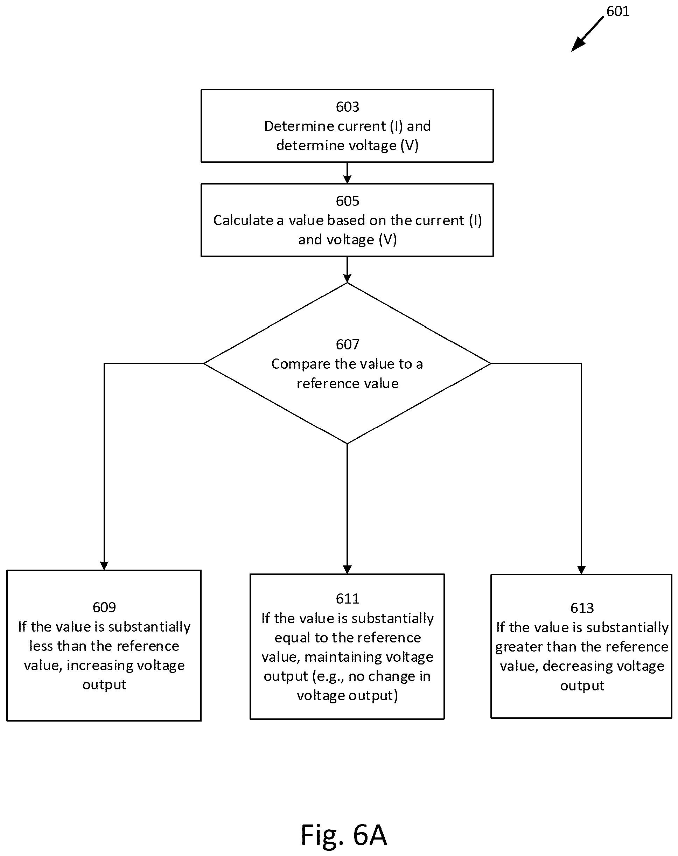

Reference is now made to **Fig. 6A** which shows a flowchart of a method **601** according to illustrative aspects of the disclosure. For example, method **601** may be applied to power system **180j** of **Fig. 5** in the description that follows. As an example, steps of method **601** may be implemented by controllers of system power devices **107,** controllers of power devices **103/103a,** and/or converters **110** acting as a primary controller.

At step **603,** a current is determined and a voltage is determined.

For example, at step **603,** a current related to the voltage at terminal **Vcpn** of system power device **107** may be determined, e.g., measured by current sensor **504.** As an example, the current flowing through resistor **R1** may be measured. In other examples, a different current may be measured or determined, for example, the current through diode **D1,** the current through diode **D2,** the current through switch **Q2,** etc. In some examples, the current may be estimated (e.g., by measuring current through inductor **L1** and estimating the current through resistor **R1** based on the measured current through inductor **L1** and the duty cycle of switch **Q1).**

For example, at step **603,** a voltage related to the voltage at terminal **Vcpn** of system power device **107** may be determined, e.g., measured by voltage sensor **502.** As an example, the voltage of resistor **RS3** may be measured. The voltage of resistor **RS3** is related to the voltage at terminal **Vcpn.** In some cases the voltage of resistor **RS3** that is measured may be used to derive the voltage at terminal **Vcpn**. In other examples, a different voltage may be sensed, for example, the voltage at terminal **V+,** the voltage at terminal **V-,** etc.

At step **605,** a value is calculated based on the determined current and the determined voltage. For example the value may be calculated using a function that depends both on the current and the voltage, e.g., a linear function, a polynomial function, etc.

At step **607** the calculated value is compared to a reference value. For example, if the value calculated at step **605** is a voltage value then the reference value may be a reference voltage value. As an example, the reference value may be a desired voltage value, desired current value, etc.

If at step **607** it is determined that the calculated value is substantially less than the reference value, then at step **609** the voltage output may be increased. For example, the control unit **20,** e.g., controller **200,** may control the converter **110,** e.g., switch **Q1** and/or switch **Q2,** to increase the output voltage of the converter **110** that is output to terminal **V-.** This may control an increase in voltage at terminal **Vcpn.**

If at step **607** it is determined that the calculated value is substantially equal to the reference value, or within a permissible range of variation from the reference value, then at step **611** the voltage output may be substantially maintained. For example, the control unit **20,** e.g., controller **200,** may control the converter **110,** e.g., switch **Q1** and/or switch **Q2,** to substantially maintain (e.g., allowing a permissible variation, but without a substantial change in average voltage) the output voltage of the converter **110** that is output to terminal **V-.** This may maintain the voltage at terminal **Vcpn.**

If at step **607** it is determined that the calculated value is substantially greater than the reference value, then at step **613** the voltage output may be decreased. For example, the control unit **20,** e.g., controller **200,** may control the converter **110,** e.g., switch **Q1** and/or switch **Q2,** to decrease the voltage of the converter **110** that is output to terminal **V-.** This may control a decrease in voltage at terminal **Vcpn.**

According to features of the disclosure herein, the value calculated at step **605** may be inversely proportional or directly proportional to the desirable change in output voltage. In the example shown in **Fig. 6A****,** the value being substantially less than the reference value causes an adjustment to increase voltage output. In another example, the value may be calculated such that the value being substantially less than a reference value causes an adjustment to decrease voltage output.

By way of non-limiting example, assuming that the value calculated at step **605** may be calculated using a linear function that depends both on the current and the voltage, e.g., using the equation: **α** = **β** * **I** + **γ** * **V;** where **α** is the calculated value, **β** and **γ** are coefficients (e.g., coefficients that are related to one or more parameter corresponding to elements of the power system, such as, resistance of one or more of the resistors in the power system), **I** is the determined current, and **V** is the determined voltage. In cases where the determined current **I** is relatively high and/or the determined voltage **V** is relatively high, then as a result the value of **α** may be relatively high. If **α** is relatively high then the calculated value **α** may be considered substantially greater than the reference value, and there may be a decrease in the voltage output. In cases where the determined current **I** is relatively low and/or the determined voltage **V** is relatively low, then as a result the value of **α** may be relatively low. If **α** is relatively low then the calculated value **α** may be considered substantially less than the reference value, and there may be an increase in the voltage output.

By way of non-limiting numerical example, if the reference value is, for example, about **1 v**, and the determined current **I** is relatively high, e.g., about **10 mA,** then the calculated value **α** may be about **1.5 v,** which is substantially greater than the reference value. As a result, there may be a decrease in the voltage output, and as a result a decrease in the determined current in the power system. If the determined current **I** is relatively low, e.g., about **5 mA,** then the calculated value **α** may be about **0.5 v,** which is substantially less than the reference value. As a result, there may be an increase in the voltage output, and as a result an increase in the determined current in the power system. In this example, if the determined current **I** is about **7.5 mA,** then the calculated value **α** may be about **1 v,** which is substantially equal (e.g., within a predetermined amount, within a measurable tolerance, etc.) to the reference value. As a result, the voltage output may be substantially maintained.

By way of another non-limiting numerical example, if the reference value is, for example, about **0.75 v,** and the determined current **V** is relatively high, e.g., about **1 v,** then the calculated value **α** may be about **1.25 v,** which is substantially greater (e.g., more than a predetermined amount, more than a measurable tolerance, etc.) than the reference value. As a result, there may be a decrease in the voltage output, and as a result a decrease in the determined voltage in the power system. If the determined voltage **V** is relatively low, e.g., about **0.25 mA,** then the calculated value **α** may be about **0.5 v,** which is substantially less (e.g., less than by a predetermined amount, less than by a measurable tolerance, etc.) than the reference value. As a result, there may be an increase in the voltage output, and as a result an increase in the determined voltage in the power system. In this example, if the determined voltage **V** is about **0.5 v,** then the calculated value **α** may be about **0.75 v,** which is substantially equal to the reference value. As a result, the voltage output may be substantially maintained.

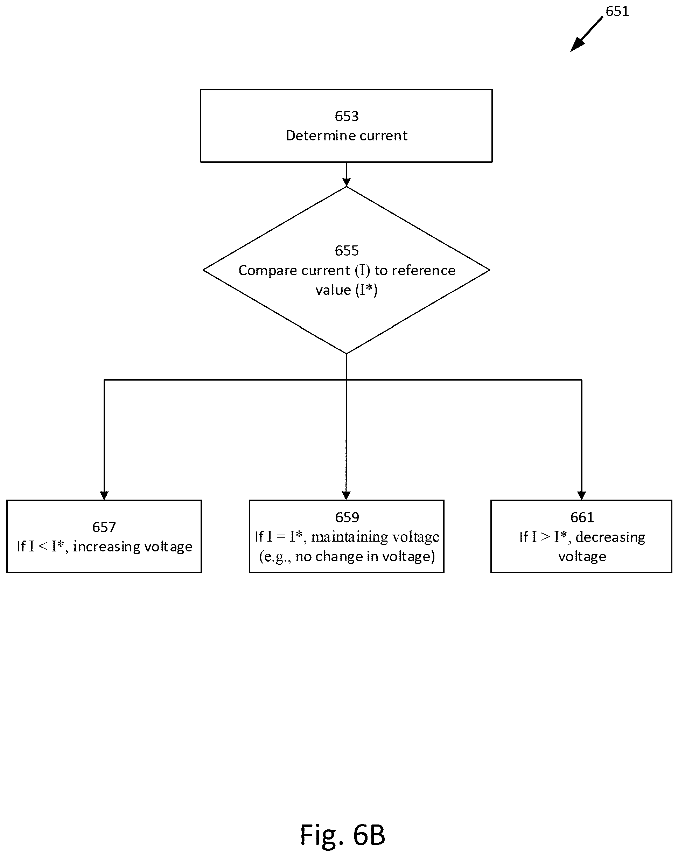

Reference is now made to **Fig. 6B** which shows a flowchart of a method **651** according to illustrative aspects of the disclosure. For example, method **651** may be applied to power system **180j** of **Fig. 5** in the description that follows. As an example, steps of method **651** may be implemented by controllers of system power devices **107,** controllers of power devices **103/103a,** and/or converters **110** acting as a primary controller.

At step **653,** a current is determined (e.g., sensed).

For example, a current related to the voltage at terminal **Vcpn** of system power device **107** may be measured, e.g., by current sensor **504.** As an example, the current flowing through resistor **R1** may be measured. In other examples, a different current may be measured or determined, for example, the current through diode **D1,** the current through diode **D2,** the current through switch **Q2,** etc. In some examples, the current may be estimated (e.g., by measuring current through inductor **L1** and estimating the current through resistor **R1** based on the measured current through inductor **L1** and the duty cycle of switch **Q1).**

At step **655,** the current is compared to a reference current value.

If at step **655** it is determined that the current is substantially less than the reference current, then at step **657** the voltage output may be increased. For example, the control unit **20,** e.g., controller **200,** may control the converter **110,** e.g., switch **Q1** and/or switch **Q2,** to increase the output voltage of the converter **110** that is output to terminal **V-.** This may control an increase in voltage at terminal **Vcpn.**

If at step **655** it is determined that the current is substantially equal to the reference current, then at step **659** the voltage output may be maintained. For example, the control unit **20,** e.g., controller **200,** may control the converter **110,** e.g., switch **Q1** and/or switch **Q2,** to substantially maintain the output voltage of the converter **110** that is output to terminal **V-.** This may maintain the voltage at terminal **Vcpn.**

If at step **655** it is determined that the calculated value is substantially greater than the reference current, then at step **661** the voltage output may be decreased. For example, the control unit **20,** e.g., controller **200,** may control the converter **110,** e.g., switch **Q1** and/or switch **Q2,** to decrease the voltage of the converter **110** that is output to terminal **V-.** This may control a decrease in voltage at terminal **Vcpn.**

According to the present disclosure, a comparison of a calculated and/or sensed value to a desired and/or reference value may be done in order to determine how to regulate a voltage in the power system, e.g., whether or not the output voltage of a converter should be increased, maintained, or decreased.

As another example, it may be determined whether one or more sensed and/or calculated parameter is in a range of desired values in order to determine how the output voltage should be regulated. For example, this range of desired values may be related to a range of voltage values and/or current values that are desired for operation of one or more system power devices **107.**

As an example, this range of values may be represented as a look-up table, e.g., stored in control unit **20,** that may be used to help determine a target output voltage for the converter, for example, based on a determined current.

As another example, two separate control methods may be used. A first control method may adjust output voltage based on a determined voltage (e.g., measured at terminal **Vcp),** and a second control method may adjust output voltage based on a determined current (e.g., measured on resistor **R1).** A controller may alternate between the two control methods, or may run both methods concurrently, for example, the first method may be run at a first frequency, and the second method may be run at a different (higher or lower) frequency, for example, as to not interfere with the first method.

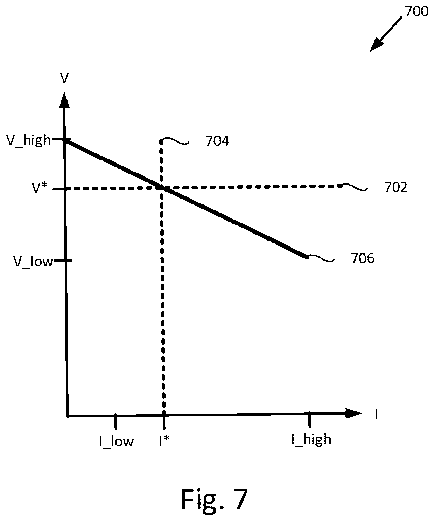

Reference is now made to **Fig. 7****,** which shows a voltage-current graph according to illustrative aspects of the disclosure. Graph **700** illustrates a desired voltage value **702** and a desired current value **704.** For example, desired voltage value **702** may be a desired voltage at terminal **Vcpn, V+, V-,** etc. For example, desired current value **704** may be a desired current through resistor **R1,** or a different current. Graph **700** also illustrates a voltage-current curve **706** indicative of a relationship between current values and voltage values. Voltage-current curve **706,** or a section of voltage-current curve **706** may be representative of a range of desired values. As an example, the range of desired values may be determined by a range of desired voltage values, e.g., between a first low voltage, **V_low,** and a second high voltage, **V_high,** and/or a range of desired current values, e.g., between a first low current, **I_low,** and a second high current, **I_high.** As mentioned above, relationships between current values and voltage values may be included in a look-up table, for example, stored in the control unit **20,** e.g., memory **210,** and used by the control unit **20,** e.g., controller **200,** to control the output of the converter **110.** For example, the voltage-current curve **706** may be used to help maintain a voltage substantially equal to, or within a certain range of, the desired voltage value **702** at similar terminals, e.g., terminals **Vcpn,** of a plurality of system power devices **107.** For example, based on a current sensed in the converter **110,** e.g., a current flowing through resistor **R1,** the look-up table may be referenced, e.g., by control unit **20** and/or controller **200,** and a target output voltage may be determined for regulating the voltage at terminal **Vcpn** based on the sensed current. This may help ensure that the voltage at one or more of the system power devices **107** does not increase to a point where it would cause one or more other system power devices **107** to be bypassed or deactivated.

By way of non-limiting numerical example, assuming that a desired voltage on terminal **Vcpn** is **495** volts (v). Circuitry **500** may be utilized to maintain voltage on terminal **Vcpn** for each system power device **107** of substantially **495v.** If the voltage representative of voltage on terminal **Vcpn** indicates that the voltage on terminal **Vcpn** is greater than a desired voltage value and/or range of voltage values, then the voltage that is output by controller **110** may be decreased to a reduced voltage which will decrease the voltage on terminal **Vcpn.**

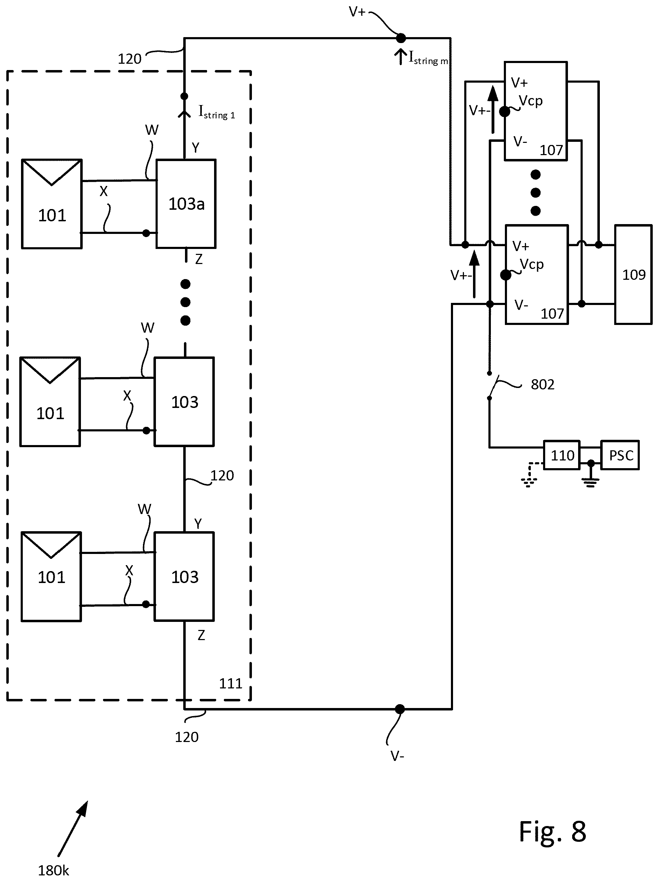

Reference is now made to **Fig. 8****,** which shows a power system **180k,** according to illustrative aspects of the disclosure. Power system **180k** includes switch **802** which is operable to switch the power system **180k** between a daytime mode of operation and a nighttime mode of operation. Switch **802** is connected between converter **110** and terminal **V-,** with one end of switch **802** connected to an output of converter **110** and a second end of switch **802** connected to terminal **V-.** In some examples, switch **802** may be switch **SC** and/or switch **Q2** described above. Although illustrated separately, it will be appreciated that switch **802** may be included as part of converter **110** and/or system power device **107.** In daytime mode, switch **802** is switched to the OFF position and converter **110** does not provide any output voltage to terminal **V-.** In nighttime mode, switch **802** is switched to the ON position and a voltage is applied to terminal **V-** above the potential of the ground connection provided by converter **110.** One or more sensors may be used to help determine one or more parameter indicative of whether the switch should be switched to daytime mode or nighttime mode. The one or more sensors may include, for example: a clock, an irradiance sensor, a temperature sensor, a current sensor, a voltage sensor, a power sensor, etc. When one or more parameters from the one or more sensors indicate that the nighttime mode is appropriate, then switch **802** may be activated, e.g., by control unit **20** and/or controller **200.** When one or more parameters from the one or more sensors indicate that the daytime mode is appropriate, then switch **802** may be de-activated, e.g., by control unit **20** and/or controller **200.** As an example, the one or more parameters can be at least one of: a time value, an irradiance value, a temperature value, a current value, a voltage value, and a power value. Converter **110** may be configured to output a higher voltage when in nighttime mode as compared to daytime mode. For example, converter **110** may be configured to connect to terminal **V-** of a system power device **107** and to output about **5v** - **10v** if operating in daytime operation mode, and to output tens or hundreds of volts if operating in nighttime operation mode, to increase expedite PID reversion (e.g., to expedite discharge of charge stored on solar panels during the daytime).

According to some features, a topology of converter **110** may be selected according to preferred time of operation. For example, a converter **110** designed to operate primarily in daytime mode may be optimized to output a low voltage (e.g., up to tens of volts), and a converter **110** designed to operate primarily in nighttime mode may be optimized to output a higher voltage (e.g., hundreds of volts). Optimization to output a higher voltage may include use of components rated for higher voltages, and/or use of magnetic elements (e.g. a transformer, for example, where converter **110** is a flyback, dual-active bridge, or different type of isolating converter) to increase output voltage. As an example, the voltage applied in a nighttime mode of operation can be in a range of about **100** volts to about **1000** volts, and the voltage applied in a daytime mode of operation can be in a range of about **10** volts to about **150** volts.

In some cases, it might not be possible for power systems to have voltage applied to terminals, e.g., **V+, V-,** etc., by converter **110** during the day. For example, in some power systems, terminal **Vcp** might be grounded during the daytime, e.g. while system power device **107** is connected to load **109.** In such cases, after the load **109** is disconnected from the system power device **107** at nighttime, then the switch **802** may be activated in order to apply a voltage at terminal **V-** above the potential of the ground connection provided by converter **110.** In such cases, the effects of PID might not be prevented during the daytime, but the effects of PID on the system may be alleviated during the nighttime.

It will be appreciated that, in some cases, a relatively low output voltage may be applied at terminal **V-** in order to raise the potential at **V-** to above ground potential, e.g. an output voltage of about **5v - 10v.** In comparison, in some cases, a relatively high output voltage may be applied at terminal **V+** in order to raise the potential at **V-** to above ground potential, e.g. an output voltage of hundreds of volts. Accordingly, an advantage of applying the output voltage at terminal **V-,** as opposed to terminal **V+,** may be that a substantially lower, relatively low voltage may be applied by converter **110.**

It should be understood that the steps in the flow charts of FIGS. 2B, 6A, and 6B need not all be performed in the order specified and some steps may be omitted, changed in order, or performed simultaneously.

It may be noted that various connections are set forth between elements herein. These connections are described in general and, unless specified otherwise, may be direct or indirect; this specification may be not intended to be limiting in this respect. Further, elements of one feature may be combined with elements from other features in appropriate combinations or sub-combinations.

All optional and preferred features and modifications of the described features and dependent claims are usable in all aspects taught herein. Furthermore, the individual features of the dependent claims, as well as all optional and preferred features and modifications of the described features are combinable and interchangeable with one another.

## Claims

1. A method comprising:
using a first control method to adjust voltage applied to a first terminal (V-) of a system power device (107), the first control method comprising:
determining (653), using a current sensor (504), current related to a voltage at a second terminal (Vcpn) of the system power device, wherein the second terminal (Vcpn) is a connection point between two capacitors (C+,C-), wherein the two capacitors (C+, C-) are connected in series between the first terminal (V-) and a third terminal (V+) of the system power device (107), wherein the first terminal and the third terminal are connected across a power source (104);
comparing (655) the current to a reference current value;
when the determined current is less than the reference current value, increasing (657) voltage applied to the first terminal (V-) of the system power device; and
when the determined current is greater than the reference current value, decreasing (661) the voltage applied to the first terminal (V-) of the system power device.

2. The method of claim 1, further comprising:
using a second control method to adjust voltage applied to the first terminal (V-) of the system power device (107), the second control method comprising:
determining, using a voltage sensor (502), voltage related to the second terminal (Vcpn) of the system power device;
comparing the voltage to a reference voltage value;
when the determined voltage is less than the reference voltage value, increasing voltage applied to the first terminal of the system power device; and
when the determined voltage is greater than the reference voltage value, decreasing the voltage applied to the first terminal of the system power device.

3. The method of claim 2, further comprising alternating between the first control method and the second control method.

4. The method of claim 2, further comprising performing the first control method and the second control method concurrently.

5. The method of claim 2, further comprising performing the first control method at a first frequency and performing the second control method at a second frequency.

6. The method of claim 5, wherein the first frequency is greater than the second frequency.

7. The method of claim 5, wherein the second frequency is greater than the first frequency.

8. The method of any of the preceding claims, wherein the first terminal is an input terminal of the system power device (107).

9. The method of any of the preceding claims, wherein when the determined current is equal to the reference current value, maintaining (659) voltage applied to the first terminal of the system power device.

10. The method of any of the preceding claims, wherein determining current (653) related to the second terminal (Vcpn) of the system power device (107) includes measuring or estimating current in circuitry (500) configured to apply voltage to the first terminal.

11. An apparatus comprising:
a controller (20) configured to execute a first control method to adjust voltage applied to a first terminal (V-) of a system power device (107), the first control method comprising:
determining (653), using a current sensor (504), current related to a voltage at a second terminal (Vcpn) of the system power device;
comparing (655) the current to a reference current value, wherein the second terminal (Vcpn) is a connection point between two capacitors (C+,C-), wherein the two capacitors (C+, C-) are connected in series between the first terminal (V-) and a third terminal (V+) of the system power device (107), wherein the first terminal and the third terminal are configured to be connected across a power source (104);
when the determined current is less than the reference current value, increasing (657) voltage applied to the first terminal (V-) of the system power device; and
when the determined current is greater than the reference current value, decreasing (661) the voltage applied to the first terminal (V-) of the system power device.

12. The apparatus of claim 11, wherein the controller is further configured to execute a second control method to adjust voltage applied to the first terminal (V-) of the system power device (107), the second control method comprising:
determining, using a voltage sensor (502), voltage related to the second terminal (Vcpn) of the system power device;
comparing the voltage to a reference voltage value;
when the determined voltage is less than the reference voltage value, increasing voltage applied to the first terminal of the system power device; and
when the determined voltage is greater than the reference voltage value, decreasing the voltage applied to the first terminal of the system power device.

13. The apparatus of claim 12, wherein the controller is further configured to alternate between the first control method and the second control method.

14. The apparatus of claim 12, wherein the controller is further configured to execute the first control method and the second control method concurrently.

15. The apparatus of claim 12, wherein the controller is further configured to execute the first control method at a first frequency and execute the second control method at a second frequency.

## Patentansprüche

1. Verfahren, umfassend:
Verwenden eines ersten Steuerverfahrens zum Anpassen einer an einen ersten Anschluss (V-) einer Systemleistungsvorrichtung (107) angelegten Spannung, wobei das erste Steuerverfahren umfasst:
Bestimmen (653), unter Verwendung eines Stromsensors (504), eines Stroms, der sich auf eine Spannung an einem zweiten Anschluss (Vcpn) der Systemleistungsvorrichtung bezieht, wobei der zweite Anschluss (Vcpn) ein Verbindungspunkt zwischen zwei Kondensatoren (C+,C-) ist, wobei die zwei Kondensatoren (C+, C) zwischen dem ersten Anschluss (V-) und einem dritten Anschluss (V+) der Systemleistungsvorrichtung (107) in Reihe geschaltet sind, wobei der erste Anschluss und der dritte Anschluss über eine Leistungsquelle (104) geschaltet sind;
Vergleichen (655) des Stroms mit einem Referenzstromwert;
wenn der bestimmte Strom kleiner als der Referenzstromwert ist, Erhöhen (657) einer an den ersten Anschluss (V-) der Systemleistungsvorrichtung angelegten Spannung; und
wenn der bestimmte Strom größer als der Referenzstromwert ist, Verringern (661) der an den ersten Anschluss (V-) der Systemleistungsvorrichtung angelegten Spannung.

2. Verfahren nach Anspruch 1, ferner umfassend:
Verwenden eines zweiten Steuerverfahrens zum Anpassen einer an den ersten Anschluss (V-) der Systemleistungsvorrichtung (107) angelegten Spannung, wobei das zweite Steuerverfahren umfasst:
Bestimmen, unter Verwendung eines Spannungssensors (502), einer Spannung, die sich auf den zweiten Anschluss (Vcpn) der Systemleistungsvorrichtung bezieht;
Vergleichen der Spannung mit einem Referenzspannungswert;
wenn die bestimmte Spannung kleiner als der Referenzspannungswert ist, Erhöhen einer an den ersten Anschluss der Systemleistungsvorrichtung angelegten Spannung; und
wenn die bestimmte Spannung größer als der Referenzspannungswert ist, Verringern der an den ersten Anschluss der Systemleistungsvorrichtung angelegten Spannung.

3. Verfahren nach Anspruch 2, ferner umfassend ein Abwechseln zwischen dem ersten Steuerverfahren und dem zweiten Steuerverfahren.

4. Verfahren nach Anspruch 2, ferner umfassend ein gleichzeitiges Durchführen des ersten Steuerverfahrens und des zweiten Steuerverfahrens.

5. Verfahren nach Anspruch 2, ferner umfassend ein Durchführen des ersten Steuerverfahrens mit einer ersten Frequenz und ein Durchführen des zweiten Steuerverfahrens mit einer zweiten Frequenz.

6. Verfahren nach Anspruch 5, wobei die erste Frequenz größer als die zweite Frequenz ist.

7. Verfahren nach Anspruch 5, wobei die zweite Frequenz größer als die erste Frequenz ist.

8. Verfahren nach einem der vorhergehenden Ansprüche, wobei der erste Anschluss ein Eingangsanschluss der Systemleistungsvorrichtung (107) ist.

9. Verfahren nach einem der vorhergehenden Ansprüche, wobei, wenn der bestimmte Strom gleich dem Referenzstromwert ist, eine an den ersten Anschluss der Systemleistungsvorrichtung angelegte Spannung aufrechterhalten (659) wird.

10. Verfahren nach einem der vorhergehenden Ansprüche, wobei das Bestimmen eines Stroms (653), der sich auf den zweiten Anschluss (Vcpn) der Systemleistungsvorrichtung (107) bezieht, ein Messen oder Schätzen eines Stroms in einer Schaltungsanordnung (500) einschließt, die dazu konfiguriert ist, eine Spannung an den ersten Anschluss anzulegen.

11. Vorrichtung, umfassend:
eine Steuerung (20), die dazu konfiguriert ist, ein erstes Steuerverfahren zum Anpassen einer an einen ersten Anschluss (V-) einer Systemleistungsvorrichtung (107) angelegten Spannung auszuführen, wobei das erste Steuerverfahren umfasst:
Bestimmen (653), unter Verwendung eines Stromsensors (504), eines Stroms, der sich auf eine Spannung an einem zweiten Anschluss (Vcpn) der Systemleistungsvorrichtung bezieht;
Vergleichen (655) des Stroms mit einem Referenzstromwert, wobei der zweite Anschluss (Vcpn) ein Verbindungspunkt zwischen zwei Kondensatoren (C+,C-) ist, wobei die zwei Kondensatoren (C+, C-) zwischen dem ersten Anschluss (V-) und einem dritten Anschluss (V+) der Systemleistungsvorrichtung (107) in Reihe geschaltet sind, wobei der erste Anschluss und der dritte Anschluss dazu konfiguriert sind, über eine Leistungsquelle (104) geschaltet zu werden;
wenn der bestimmte Strom kleiner als der Referenzstromwert ist, Erhöhen (657) einer an den ersten Anschluss (V-) der Systemleistungsvorrichtung angelegten Spannung; und
wenn der bestimmte Strom größer als der Referenzstromwert ist, Verringern (661) der an den ersten Anschluss (V-) der Systemleistungsvorrichtung angelegten Spannung.

12. Vorrichtung nach Anspruch 11, wobei die Steuerung ferner dazu konfiguriert ist, ein zweites Steuerverfahren zum Anpassen einer an den ersten Anschluss (V-) der Systemleistungsvorrichtung (107) angelegten Spannung auszuführen, wobei das zweite Steuerverfahren umfasst:
Bestimmen, unter Verwendung eines Spannungssensors (502), einer Spannung, die sich auf den zweiten Anschluss (Vcpn) der Systemleistungsvorrichtung bezieht;
Vergleichen der Spannung mit einem Referenzspannungswert;
wenn die bestimmte Spannung kleiner als der Referenzspannungswert ist, Erhöhen einer an den ersten Anschluss der Systemleistungsvorrichtung angelegten Spannung; und
wenn die bestimmte Spannung größer als der Referenzspannungswert ist, Verringern der an den ersten Anschluss der Systemleistungsvorrichtung angelegten Spannung.

13. Vorrichtung nach Anspruch 12, wobei die Steuerung ferner dazu konfiguriert ist, zwischen dem ersten Steuerverfahren und dem zweiten Steuerverfahren abzuwechseln.

14. Vorrichtung nach Anspruch 12, wobei die Steuerung ferner dazu konfiguriert ist, das erste Steuerverfahren und das zweite Steuerverfahren gleichzeitig auszuführen.

15. Vorrichtung nach Anspruch 12, wobei die Steuerung ferner dazu konfiguriert ist, das erste Steuerverfahren mit einer ersten Frequenz auszuführen und das zweite Steuerverfahren mit einer zweiten Frequenz auszuführen.

## Revendications

1. Procédé comprenant :
l'utilisation d'un premier procédé de commande pour ajuster une tension appliquée à une première borne (V-) d'un dispositif de puissance de système (107), le premier procédé de commande comprenant les étapes suivantes :
en utilisant un capteur de courant (504), déterminer (653) un courant lié à une tension au niveau d'une deuxième borne (Vcpn) du dispositif de puissance de système, dans lequel la deuxième borne (Vcpn) est un point de connexion entre deux condensateurs (C+, C-), dans lequel les deux condensateurs (C+, C-) sont connectés en série entre la première borne (V-) et une troisième borne (V+) du dispositif de puissance de système (107), dans lequel la première borne et la troisième borne sont connectées aux bornes d'une source de puissance (104) ;
comparer (655) le courant à une valeur de courant de référence ;
lorsque le courant déterminé est inférieur à la valeur de courant de référence, augmenter (657) une tension appliquée à la première borne (V-) du dispositif de puissance de système ; et
lorsque le courant déterminé est supérieur à la valeur de courant de référence, diminuer (661) la tension appliquée à la première borne (V-) du dispositif de puissance de système.

2. Procédé selon la revendication 1, comprenant en outre :
l'utilisation d'un deuxième procédé de commande pour ajuster une tension appliquée à la première borne (V-) du dispositif de puissance de système (107), le deuxième procédé de commande comprenant les étapes suivantes :
en utilisant un capteur de tension (502), déterminer une tension liée à la deuxième borne (Vcpn) du dispositif de puissance de système ;
comparer la tension à une valeur de tension de référence ;
lorsque la tension déterminée est inférieure à la valeur de tension de référence, augmenter une tension appliquée à la première borne du dispositif de puissance de système ; et
lorsque la tension déterminée est supérieure à la valeur de tension de référence, diminuer la tension appliquée à la première borne du dispositif de puissance de système.

3. Procédé selon la revendication 2, comprenant en outre l'alternance entre le premier procédé de commande et le deuxième procédé de commande.

4. Procédé selon la revendication 2, comprenant en outre la mise en œuvre du premier procédé de commande et du deuxième procédé de commande simultanément.

5. Procédé selon la revendication 2, comprenant en outre la mise en œuvre du premier procédé de commande à une première fréquence et la mise en œuvre du deuxième procédé de commande à une deuxième fréquence.

6. Procédé selon la revendication 5, dans lequel la première fréquence est supérieure à la deuxième fréquence.

7. Procédé selon la revendication 5, dans lequel la deuxième fréquence est supérieure à la première fréquence.

8. Procédé selon l'une des revendications précédentes, dans lequel la première borne est une borne d'entrée du dispositif de puissance de système (107).

9. Procédé selon l'une des revendications précédentes, dans lequel, lorsque le courant déterminé est égal à la valeur de courant de référence, la tension appliquée à la première borne du dispositif de puissance de système est maintenue (659).

10. Procédé selon l'une des revendications précédentes, dans lequel la détermination du courant (653) lié à la deuxième borne (Vcpn) du dispositif de puissance de système (107) comporte la mesure ou l'estimation du courant dans un ensemble de circuits (500) configuré pour appliquer une tension à la première borne.

11. Appareil comprenant :
un contrôleur (20) configuré pour exécuter un premier procédé de commande pour ajuster une tension appliquée à une première borne (V) d'un dispositif de puissance de système (107), le premier procédé de commande comprenant les étapes suivantes :
en utilisant un capteur de courant (504), déterminer (653) un courant lié à une tension au niveau d'une deuxième borne (Vcpn) du dispositif de puissance de système ;
comparer (655) le courant à une valeur de courant de référence, dans lequel la deuxième borne (Vcpn) est un point de connexion entre deux condensateurs (C+, C-), dans lequel les deux condensateurs (C+, C-) sont connectés en série entre la première borne (V) et une troisième borne (V+) du dispositif de puissance de système (107), dans lequel la première borne et la troisième borne sont configurées pour être connectées aux bornes d'une source de puissance (104) ;
lorsque le courant déterminé est inférieur à la valeur de courant de référence, augmenter (657) une tension appliquée à la première borne (V-) du dispositif de puissance de système ; et
lorsque le courant déterminé est supérieur à la valeur de courant de référence, diminuer (661) la tension appliquée à la première borne (V-) du dispositif de puissance de système.

12. Appareil selon la revendication 11, dans lequel le contrôleur est en outre configuré pour exécuter un deuxième procédé de commande pour ajuster une tension appliquée à la première borne (V-) du dispositif de puissance de système (107), le deuxième procédé de commande comprenant les étapes suivantes :
en utilisant un capteur de tension (502), déterminer une tension liée à la deuxième borne (Vcpn) du dispositif de puissance de système ;
comparer la tension à une valeur de tension de référence ;
lorsque la tension déterminée est inférieure à la valeur de tension de référence, augmenter une tension appliquée à la première borne du dispositif de puissance de système ; et
lorsque la tension déterminée est supérieure à la valeur de tension de référence, diminuer la tension appliquée à la première borne du dispositif de puissance de système.

13. Appareil selon la revendication 12, dans lequel le contrôleur est en outre configuré pour alterner entre le premier procédé de commande et le deuxième procédé de commande.

14. Appareil selon la revendication 12, dans lequel le contrôleur est en outre configuré pour exécuter le premier procédé de commande et le deuxième procédé de commande simultanément.

15. Appareil selon la revendication 12, dans lequel le contrôleur est en outre configuré pour exécuter le premier procédé de commande à une première fréquence et pour exécuter le deuxième procédé de commande à une deuxième fréquence.
